(19) Europäisches Patentamt
European Patent Office
Office européen des brevets

(11) **EP 3 348 869 B1**

(12) **EUROPEAN PATENT SPECIFICATION**

(45) Date of publication and mention
of the grant of the patent:
**10.03.2021 Bulletin 2021/10**

(51) Int Cl.:
*F16H 55/08* (2006.01)   *F16H 55/17* (2006.01)

(21) Application number: **16843361.3**

(86) International application number:
**PCT/CN2016/072279**

(22) Date of filing: **27.01.2016**

(87) International publication number:
**WO 2017/041417 (16.03.2017 Gazette 2017/11)**

(54) **CONJUGATE CURVE-BASED CYLINDRICAL GEAR MESHING PAIR HAVING MULTIPLE CONTACT POINTS**

AUF KONJUGIERTER KURVE BASIERENDES ZYLINDRISCHES ZAHNEINGRIFFSPAAR MIT MEHREREN KONTAKTPUNKTEN

PAIRE ENGRENÉE D'ENGRENAGES CYLINDRIQUES À BASE DE COURBES CONJUGUÉES AYANT PLUSIEURS POINTS DE CONTACT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.09.2015 CN 201510579956**

(43) Date of publication of application:
**18.07.2018 Bulletin 2018/29**

(73) Proprietor: **Chongqing University
Shapingba, Chongqing 400044 (CN)**

(72) Inventors:
• **CHEN, BingKui**
  **Chongqing 400044 (CN)**
• **LIANG, Dong**
  **Chongqing 400044 (CN)**
• **TAN, RuLong**
  **Chongqing 400044 (CN)**
• **LI, ChaoYang**
  **Chongqing 400044 (CN)**

(74) Representative: **Schmitt-Nilson Schraud Waibel Wohlfrom
Patentanwälte Partnerschaft mbB
Pelkovenstraße 143
80992 München (DE)**

(56) References cited:
  CN-A- 103 075 493    CN-A- 103 939 575
  CN-A- 104 595 422    US-A1- 2010 212 444

• **CHEN, BINGKUI ET AL.: 'Tooth Profile Generation of Conjugate-curve Gears' CHINESE JOURNAL OF MECHANICAL ENGINEERING vol. 50, no. 3, 28 February 2014, pages 18 - 24, XP009508899**

**Description**

TECHNICAL FIELD

The present invention relates to a technical field of gear transmission, and in particular, to a multipoint contact cylindrical gear meshing pair based on conjugate curves.

BACKGROUND

As a typical mechanical foundation element, the gears determine the equipment performance to a large extent. Therefore, it is of great importance and practical value for the design of high-performance gear transmission components. The forms of traditional gear such as spiral gear, worm gear drive, bevel gears and hypoid gear, are conjugate surfaces. Meshing tooth profile is convex-to-convex contact style for the contact line during the meshing process. So it has the disadvantages of low load capacity, large sliding rate and the wear of tooth profiles.

With the development of science and technology, more requirements for gear transmission with high speed, heavy load and large power are put forward. So the great progress for circular arc gear has been developed. Circular arc gear is a kind of point contact engagement between the convex and concave circular arc profiles, and it is approximately pure rolling. But the contact point is changed into contact surface due to the running-in motion of tooth profiles and contact strength can be increased greatly. At present, two patents (CN102853054A and CN103075493A) disclose the gear and its meshing pair based on conjugate curves. The tooth profiles are spherical tubular enveloping surfaces generated by a sphere motion along the circle center curve. And only a single contact point exists in the engagement process. To obtain well contact characteristics, the gear pair using a soft tooth surface or hardened should running-in and usually it will increase the manufacturing costs of enterprises. In the actual application, compared with the soft or the medium-hard tooth profile, a hard tooth profile has higher contact strength and bearing capacity. Therefore, a multipoint contact cylindrical gear pair based on conjugate curves is needed. The proposed tooth profiles have a multipoint contact characteristic when initially manufactured, and it can be designed as the hard tooth surface for high strength industrial requirements. Meanwhile, the running-in time of tooth profiles can be greatly decreased, or even without running-in.

CN 103 939 575 A discloses a point contactor gear, a meshing pair, and a machining tool based on conjugate curves including a convex gear and a concave gear which are in one-point or multi-point contact meshing, wherein the multiple meshing points are distributed on the same cross-section of tooth profiles.

D2 (CHEN, BINGKUI ET AL.: "Tooth Profile Generation of Conjugate-curve Gears", CHINESE JOURNAL OF MECHANICAL ENGINEERING, vol. 50, no. 3, 28 February 2014, pages 18-24) discloses a construction of a tubular surface in the case of single point contact based on the equidistance-envelope method.

SUMMARY

In light of this, the object of the present invention is to overcome defects of the prior art, and provide a multipoint contact cylindrical gear pair based on conjugate curves, which may have a multipoint contact characteristic according to use requirements.

The present invention relates to a multipoint contact cylindrical gear meshing pair according to the appended claim.

The present invention discloses a multipoint contact cylindrical gear pair based on conjugate curves, it includes a convex gear and a concave gear, and there are multiple meshing points. The meshing tooth profiles of the convex gear and the concave gear are the tubular surface;

further, the number of the meshing points of the convex gear and the concave gear is 3, and the points are distributed on different cross-section of tooth profiles;

further, three contact curves formed by the meshing points on the tooth profile of the convex gear or the concave gear are a contact curve $l_1$, a contact curve $l_2$ and a contact curve $l_3$, respectively;

the equation of the contact curve $l_1$ is: $\begin{cases} x_1 = r\cos\theta_1 \\ y_1 = r\sin\theta_1 \\ z_1 = p\theta_1 \end{cases}$ wherein $r$ is a radius of the cylindrical helix curve $l_1$, $\theta_1$ is a curve

parameter of the cylindrical helix curve $l_1$, and its value range is $\theta_{1i} \leq \theta_1 \leq \theta_{1o}$, $p$ is a helix parameter; the equation of the contact curve $l_2$ is:
$$\begin{cases} x_2 = r\cos(\theta_1 - \Delta\theta_1) \\ y_2 = r\sin(\theta_1 - \Delta\theta_1) \\ z_2 = p\theta_1 \end{cases}$$
wherein $r$ is a radius of the cylindrical helix curve $l_1$, $\theta_1$ is a curve

parameter of the cylindrical helix curve $l_1$, and its value range is $\theta_{1i} \leq \theta_1 \leq \theta_{1o}$, $\Delta\theta_1$ is a angle difference, $p$ is a helix parameter; the equation of the contact curve $l_3$ is:
$$\begin{cases} x_3 = r\cos(\theta_1 - \Delta\theta_2) \\ y_3 = r\sin(\theta_1 - \Delta\theta_2) \\ z_3 = p\theta_1 \end{cases}$$
wherein $r$ is a radius of the cylindrical helix

curve $l_1$, $\theta_1$ is a curve parameter of the cylindrical helix curve $l_1$, and its value range is $\theta_{1i} \leq \theta_1 \leq \theta_{1o}$, $\Delta\theta_2$ is a angle difference, $p$ is a helix parameter; further, the tooth profile of the convex gear includes three parts: a surface $\Sigma_1$, a surface $\Sigma_2$ and a surface $\Sigma_3$ ; the tooth profile of the concave gear also includes three parts: a surface $\Sigma_1'$, a surface $\Sigma_2'$ and

a surface $\Sigma_3'$ ; the equation of the surface $\Sigma_1$ is:
$$\begin{cases} x_{\Sigma 1} = r\cos\theta_1 + h_1 n_{x1} + h_1 \cos\varphi_1 \cos\alpha_1 \\ y_{\Sigma 1} = r\sin\theta_1 + h_1 n_{y1} + h_1 \cos\varphi_1 \sin\alpha_1 \\ z_{\Sigma 1} = p\theta_1 + h_1 n_{z1} + h_1 \sin\varphi_1 \\ \Phi(\theta_1, \varphi_1, \alpha_1) = (r_{\theta_1}, r_{\varphi_1}, r_{\alpha_1}) = 0 \end{cases}$$
where

$$r_{\theta_1} = \{-r\sin\theta_1 + h_1 n_{x1}(\theta_1), r\cos\theta_1 + h_1 n_{y1}(\theta_1), p + h_1 n_{z1}(\theta_1)\}$$

$$r_{\varphi} = \{-h_1 \sin\varphi_1 \cos\alpha_1, -h_1 \sin\varphi_1 \sin\alpha_1, h_1 \cos\varphi_1\}$$

$$r_{\alpha} = \{-h_1 \cos\varphi_1 \sin\alpha_1, h_1 \cos\varphi_1 \cos\alpha_1, 0\}$$

wherein $h_1$ is a radius of the tooth profile, $n_{x1}$, $n_{y1}$ and $n_{z1}$ denote components in directions of respective coordinate axes of a normal vector at a position where the segment of the tooth profile passes the contact point respectively, parameters $\varphi_1$ and $\alpha_1$ denote general sphere $L_1$ parameters respectively;

the equation of the surface $\Sigma_2$ is:
$$\begin{cases} x_{\Sigma 2} = r\cos\theta_2 + h_2 n_{x2} + h_2 \cos\varphi_2 \cos\alpha_2 \\ y_{\Sigma 2} = r\sin\theta_2 + h_2 n_{y2} + h_2 \cos\varphi_2 \sin\alpha_2 \\ z_{\Sigma 2} = p(\theta_2 + \Delta\theta_1) + h_2 n_{z2} + h_2 \sin\varphi_2 \\ \Phi(\theta_2, \varphi_2, \alpha_2) = (r_{\theta_2}, r_{\varphi_2}, r_{\alpha_2}) = 0 \\ \theta_2 = \theta_1 - \Delta\theta_1 \end{cases}$$
where

$$r_{\theta_2} = \{-r\sin\theta_2 + h_2 n_{x2}(\theta_2), r\cos\theta_2 + h_2 n_{y2}(\theta_2), p + h_2 n_{z2}(\theta_2)\}$$

$$r_{\varphi_2} = \{-h_2 \sin\varphi_2 \cos\alpha_2, -h_2 \sin\varphi_2 \sin\alpha_2, h_2 \cos\varphi_2\}$$

$$r_{\alpha_2} = \{-h_2 \cos\varphi_2 \sin\alpha_2, h_2 \cos\varphi_2 \cos\alpha_2, 0\}$$

wherein $h_2$ is a radius of the tooth profile, $n_{x2}$, $n_{y2}$ and $n_{z2}$ denote components in directions of respective coordinate axes of a normal vector at a position where the segment of the tooth profile passes the contact point respectively, parameters $\varphi_2$ and $\alpha_2$ denote general sphere $L_2$ parameters respectively;

the equation of the surface $\Sigma_3$ is:
$$\begin{cases} x_{\Sigma 3} = r\cos\theta_3 + h_3 n_{x3} + h_3 \cos\varphi_3 \cos\alpha_3 \\ y_{\Sigma 3} = r\sin\theta_3 + h_3 n_{y3} + h_3 \cos\varphi_3 \sin\alpha_3 \\ z_{\Sigma 3} = p(\theta_3 + \Delta\theta_2) + h_3 n_{z3} + h_3 \sin\varphi_3 \\ \Phi(\theta_3,\varphi_3,\alpha_3) = (r_{\theta_3}, r_{\varphi_3}, r_{\alpha_3}) = 0 \\ \theta_3 = \theta_1 - \Delta\theta_2 \end{cases} \quad \text{where}$$

$$r_{\theta_3} = \{-r\sin\theta_3 + h_3 n_{x3}(\theta_3), r\cos\theta_3 + h_3 n_{y3}(\theta_3), p + h_3 n_{z3}(\theta_3)\}$$

$$r_{\varphi_3} = \{-h_3 \sin\varphi_3 \cos\alpha_3, -h_3 \sin\varphi_3 \sin\alpha_3, h_3 \cos\varphi_3\}$$

$$r_{\alpha_3} = \{-h_3 \cos\varphi_3 \sin\alpha_3, h_3 \cos\varphi_3 \cos\alpha_3, 0\}$$

wherein $h_3$ is a radius of the tooth profile, $n_{x3}$, $n_{y3}$ and $n_{z3}$ denote components in directions of respective coordinate axes of a normal vector at a position where the segment of the tooth profile passes the contact point respectively, parameters $\varphi_3$ and $\alpha_3$ denote general sphere $L_3$ parameters respectively;

the equation of the surface $\Sigma_1'$ is:
$$\begin{cases} x_{\Sigma 1} = r\cos\theta_1 - h_1 n_{x1} + h_1 \cos\varphi_1 \cos\alpha_1 \\ y_{\Sigma 1} = r\sin\theta_1 - h_1 n_{y1} + h_1 \cos\varphi_1 \sin\alpha_1 \\ z_{\Sigma 1} = p\theta_1 - h_1 n_{z1} + h_1 \sin\varphi_1 \\ \Phi(\theta_1,\varphi_1,\alpha_1) = (r_{\theta_1}, r_{\varphi_1}, r_{\alpha_1}) = 0 \end{cases} \quad \text{where}$$

$$r_{\theta_1} = \{-r\sin\theta_1 - h_1 n_{x1}(\theta_1), r\cos\theta_1 - h_1 n_{y1}(\theta_1), p - h_1 n_{z1}(\theta_1)\}$$

$$r_{\varphi} = \{-h_1 \sin\varphi_1 \cos\alpha_1, -h_1 \sin\varphi_1 \sin\alpha_1, h_1 \cos\varphi_1\}$$

$$r_{\alpha} = \{-h_1 \cos\varphi_1 \sin\alpha_1, h_1 \cos\varphi_1 \cos\alpha_1, 0\}$$

wherein $h_1$ is a radius of the tooth profile, $n_{x1}$, $n_{y1}$ and $n_{z1}$ denote components in directions of respective coordinate axes of a normal vector at a position where the segment of the tooth profile passes the contact point respectively, parameters $\varphi_1$ and $\alpha_1$ denote general sphere $L_1$ parameters respectively;

the equation of the surface $\Sigma_2'$ is:
$$\begin{cases} x_{\Sigma 2} = r\cos\theta_2 - h_2 n_{x2} + h_2 \cos\varphi_2 \cos\alpha_2 \\ y_{\Sigma 2} = r\sin\theta_2 - h_2 n_{y2} + h_2 \cos\varphi_2 \sin\alpha_2 \\ z_{\Sigma 2} = p(\theta_2 + \Delta\theta_1) - h_2 n_{z2} + h_2 \sin\varphi_2 \\ \Phi(\theta_2,\varphi_2,\alpha_2) = (r_{\theta_2}, r_{\varphi_2}, r_{\alpha_2}) = 0 \\ \theta_2 = \theta_1 - \Delta\theta_1 \end{cases} \quad \text{where}$$

$$r_{\theta_2} = \{-r\sin\theta_2 - h_2 n_{x2}(\theta_2), r\cos\theta_2 - h_2 n_{y2}(\theta_2), p - h_2 n_{z2}(\theta_2)\}$$

$$r_{\varphi_2} = \{-h_2 \sin\varphi_2 \cos\alpha_2, -h_2 \sin\varphi_2 \sin\alpha_2, h_2 \cos\varphi_2\}$$

$$r_{\alpha_2} = \{-h_2 \cos\varphi_2 \sin\alpha_2, h_2 \cos\varphi_2 \cos\alpha_2, 0\}$$

wherein $h_2$ is a radius of the tooth profile, $n_{x2}$, $n_{y2}$ and $n_{z2}$ denote components in directions of respective coordinate axes of a normal vector at a position where the segment of the tooth profile passes the contact point respectively, parameters $\varphi_2$ and $\alpha_2$ denote general sphere $L_2$ parameters respectively;

the equation of the surface $\Sigma_3'$ is:
$$\begin{cases} x_{\Sigma 3} = r\cos\theta_3 - h_3 n_{x3} + h_3 \cos\varphi_3 \cos\alpha_3 \\ y_{\Sigma 3} = r\sin\theta_3 - h_3 n_{y3} + h_3 \cos\varphi_3 \sin\alpha_3 \\ z_{\Sigma 3} = p(\theta_3 + \Delta\theta_2) - h_3 n_{z3} + h_3 \sin\varphi_3 \\ \Phi(\theta_3, \varphi_3, \alpha_3) = (r_{\theta_3}, r_{\varphi_3}, r_{\alpha_3}) = 0 \\ \theta_3 = \theta_1 - \Delta\theta_2 \end{cases} \quad \text{where}$$

$$r_{\theta_3} = \{-r\sin\theta_3 - h_3 n_{x3}(\theta_3), r\cos\theta_3 - h_3 n_{y3}(\theta_3), p - h_3 n_{z3}(\theta_3)\}$$

$$r_{\varphi_3} = \{-h_3 \sin\varphi_3 \cos\alpha_3, -h_3 \sin\varphi_3 \sin\alpha_3, h_3 \cos\varphi_3\}$$

$$r_{\alpha_3} = \{-h_3 \cos\varphi_3 \sin\alpha_3, h_3 \cos\varphi_3 \cos\alpha_3, 0\}$$

wherein $h_3$ is a radius of the tooth profile, $n_{x3}$, $n_{y3}$ and $n_{z3}$ denote components in directions of respective coordinate axes of a normal vector at a position where the segment of the tooth profile passes the contact point respectively, parameters $\varphi_3$ and $\alpha_3$ denote general sphere $L_3$ parameters respectively;

further, the number of the meshing points of the convex gear and the concave gear is 4, and the meshing points are $p_1$, $p_2$, $p_3$ and $p_4$ respectively; three contact curves formed by the meshing points on the tooth profile of the convex gear or the concave gear are a contact curve $l_1$, a contact curve $l_2$ and a contact curve $l_3$ respectively; the meshing point $p_1$ is distributed on the contact curve $l_1$, the meshing point $p_2$ as well as the meshing point $p_3$ are distributed on the contact curve $l_2$, the meshing point $p_4$ is distributed on the contact curve $l_3$; the contact curve $l_2$ is a quadric parabolic curve, both the contact curve $l_1$ and the contact curve $l_3$ are circular arc curves and arranged at two sides of the contact curve $l_2$ in a tooth width direction;

further, the tooth profile of the convex gear includes a surface $\Sigma_1$; the tooth profile of the concave gear includes a surface $\Sigma_1'$, a surface $\Sigma_2'$ and a surface $\Sigma_3'$ which smoothly transition to each other;

the equation of the surface $\Sigma_1$ is:
$$\begin{cases} x_c = r_c \cos\theta_c + h_{1c} n_{x1c} + h_{1c} \cos\varphi_c \cos\alpha_c \\ y_c = r_c \sin\theta_c + h_{1c} n_{y1c} + h_{1c} \cos\varphi_c \sin\alpha_c \\ z_c = p_c \theta_c + h_{1c} n_{z1c} + h_{1c} \sin\varphi_c \\ \Phi(\theta_c, \varphi_c, \alpha_c) = (r_{\theta_c}, r_{\varphi_c}, r_{\alpha_c}) = 0 \end{cases} \quad \text{where}$$

$$r_{\theta_c} = \{-r_c \sin\theta_c + h_{1c} n_{x1c}(\theta_c), r_c \cos\theta_c + h_{1c} n_{y1c}(\theta_c), p_c + h_{1c} n_{z1c}(\theta_c)\}$$

$$r_{\varphi_c} = \{-h_{1c} \sin\varphi_c \cos\alpha_c, -h_{1c} \sin\varphi_c \sin\alpha_c, h_{1c} \cos\varphi_c\}$$

$$r_{\alpha_c} = \{-h_{1c} \cos\varphi_c \sin\alpha_c, h_{1c} \cos\varphi_c \cos\alpha_c, 0\}$$

wherein $r_c$ denotes a radius of a cylinder where the cylinder helix curve is located, $\theta_c$ denotes a curve parameter of the cylinder helix, $p_c$ denotes a helix parameter; $h_{1c}$ denotes a radius of the meshing tubular tooth surface, $n_{x1c}$, $n_{y1c}$ and $n_{z1c}$ denote components in directions of respective coordinate axes of a normal vector at a position where the segment of the meshing tubular tooth surface passes the contact point respectively, parameters $\varphi_c$ and $\alpha_c$ denote general sphere parameters respectively;

the equation of the surface $\sum_1'$ is:

$$\begin{cases} x_{\Sigma 1} = \left(\rho\sin\alpha + X\right)\cos\phi_1 - \left(-\rho\cos\alpha + L\right)\cos\beta\sin\phi_1 + r_1\cos\phi_1 \\ y_{\Sigma 1} = \left(\rho\sin\alpha + X\right)\sin\phi_1 - \rho\cos\alpha + L\cos\beta\cos\phi_1 + r_1\sin\phi_1 \\ z_{\Sigma 1} = r_1\phi_1\cot\beta + \rho\cos\alpha + L\sin\beta \end{cases}$$

where $\phi_1$ is a gear rotation angle, $r_1$ is a radius of a gear pitch cylinder, $\beta$ is a helix angle of a gear tooth. If a centre of a circle of the tooth profile is located outside the gear pitch cylinder, $X$ is positive, and if the centre of the circle of the tooth profile is located inside the gear pitch cylinder, $X$ is negative; if the centre of the circle of the tooth profile is located at a different side of a tooth shape symmetry axis, $L$ is positive, and if the centre of the circle of the tooth profile is located at a same side of the tooth shape symmetry axis, $L$ is negative;

the equation of the surface $\sum_2'$ is:

$$\begin{cases} x_{\Sigma 2} = \left(t\cos\alpha_n - \dfrac{t^2}{2A}\sin\alpha_n + (\dfrac{\rho\sin^2\alpha}{2\cos\alpha} + A)\sin\alpha_n\right)\cos\phi_1 \\ \qquad - \left(t\sin\alpha_n + \dfrac{t^2}{2A}\cos\alpha_n - (\dfrac{\rho\sin^2\alpha}{2\cos\alpha} + A)\cos\alpha_n\right)\cos\beta\sin\phi_1 + r_1\cos\phi_1 \\ y_{\Sigma 2} = \left(t\cos\alpha_n - \dfrac{t^2}{2A}\sin\alpha_n + (\dfrac{\rho\sin^2\alpha}{2\cos\alpha} + A)\sin\alpha_n\right)\sin\phi_1 \\ \qquad + \left(t\sin\alpha_n + \dfrac{t^2}{2A}\cos\alpha_n - (\dfrac{\rho\sin^2\alpha}{2\cos\alpha} + A)\cos\alpha_n\right)\cos\beta\cos\phi_1 + r_1\sin\phi_1 \\ z_{\Sigma 2} = r_1\phi_1\cot\beta - \left(t\sin\alpha_n + \dfrac{t^2}{2A}\cos\alpha_n - (\dfrac{\rho\sin^2\alpha}{2\cos\alpha} + A)\cos\alpha_n\right)\sin\beta \end{cases}$$

the equation of the surface $\sum_3'$ is:

$$\begin{cases} x_{\Sigma 3} = \left(\rho'\sin\alpha' + X'\right)\cos\phi_1 - \left(-\rho'\cos\alpha' + L'\right)\cos\beta\sin\phi_1 + r_1\cos\phi_1 \\ y_{\Sigma 3} = \left(\rho'\sin\alpha' + X'\right)\sin\phi_1 - \rho'\cos\alpha' + L'\cos\beta\cos\phi_1 + r_1\sin\phi_1 \\ z_{\Sigma 3} = r_1\phi_1\cot\beta + \rho'\cos\alpha' + L'\sin\beta \end{cases}$$

where $\phi_1$ is a gear rotation angle, $r_1$ is a radius of a gear pitch cylinder, $\beta$ is a helix angle of a gear tooth. If a centre of a circle of the tooth profile is located outside the gear pitch cylinder, $X'$ is positive, and if the centre of the circle of the tooth profile is located inside the gear pitch cylinder, $X'$ is negative; if the centre of the circle of the tooth profile is located at a different side of a tooth shape symmetry axis, $L'$ is positive, and if the centre of the circle of the tooth profile is located at a same side of the tooth shape symmetry axis, $L'$ is negative;

further, the number of the meshing points of the convex gear and the concave gear is 5, the meshing points are $p_1$, $p_2$, $p_3$, $p_4$ and $p_5$ respectively; three contact curves formed by the meshing points on the tooth profile of the convex gear or the concave gear are a contact curve $l_1$, a contact curve $l_2$ and a contact curve $l_3$ respectively; the meshing point $p_1$ as well as the meshing point $p_2$ are distributed on the contact curve $l_1$, the meshing point $p_3$ is distributed on the contact

curve $l_2$, the meshing point $p_4$ as well as the meshing point $p_5$ are distributed on the contact curve $l_3$; the contact curve $l_2$ is a circular arc curve, both the contact curve $l_1$ and the contact curve $l_3$ are quadric parabolic curves and arranged at two sides of the contact curve $l_2$ in a tooth width direction;

further, the tooth profile of the convex gear includes a surface $\Sigma_1$ ; the tooth profile of the concave gear includes a surface $\Sigma_1'$ , a surface $\Sigma_2'$ and a surface $\Sigma_3'$ which smoothly transition to each other;

the equation of the surface $\Sigma_1$ is:
$$\begin{cases} x_m = r_m \cos\theta_m + h_{1m} n_{x1m} + h_{1m} \cos\varphi_m \cos\alpha_m \\ y_m = r_m \sin\theta_m + h_{1m} n_{y1m} + h_{1m} \cos\varphi_m \sin\alpha_m \\ z_m = p_m \theta_m + h_{1m} n_{z1m} + h_{1m} \sin\varphi_m \\ \Phi(\theta_m, \varphi_m, \alpha_m) = (\boldsymbol{r}_{\theta_m}, \boldsymbol{r}_{\varphi_m}, \boldsymbol{r}_{\alpha_m}) = 0 \end{cases} \text{where}$$

$$\boldsymbol{r}_{\theta_m} = \{-r_m \sin\theta_m + h_{1m} n_{x1m}(\theta_m), r_m \cos\theta_m + h_{1m} n_{y1m}(\theta_m), p_m + h_{1m} n_{z1m}(\theta_m)\}$$

$$\boldsymbol{r}_{\varphi_m} = \{-h_{1m} \sin\varphi_m \cos\alpha_m, -h_{1m} \sin\varphi_m \sin\alpha_m, h_{1m} \cos\varphi_m\}$$

$$\boldsymbol{r}_{\alpha_m} = \{-h_{1m} \cos\varphi_m \sin\alpha_m, h_{1m} \cos\varphi_m \cos\alpha_m, 0\}$$

wherein $r_m$ denotes a radius of a cylinder where the cylinder helix curve is located, $\theta_m$ denotes a curve parameter of the cylinder helix, $p_m$ denotes a helix parameter; $h_{1m}$ denotes a radius of the meshing tubular tooth surface, $n_{x1m}$, $n_{y1m}$ and $n_{z1m}$ denote components in directions of respective coordinate axes of a normal vector at a position where the segment of the meshing tubular tooth surface passes the contact point respectively, parameters $\varphi_m$ and $\alpha_m$ denote general sphere parameters respectively;

the equation of the surface $\Sigma_1'$ is:

$$\begin{cases} x_{\Sigma 1} = \left( t\cos\alpha_n - \dfrac{t^2}{2A}\sin\alpha_n + (\dfrac{\rho\sin^2\alpha}{2\cos\alpha} + A)\sin\alpha_n \right)\cos\phi_1 \\ \qquad - \left( t\sin\alpha_n + \dfrac{t^2}{2A}\cos\alpha_n - (\dfrac{\rho\sin^2\alpha}{2\cos\alpha} + A)\cos\alpha_n \right)\cos\beta\sin\phi_1 + r_1\cos\phi_1 \\ y_{\Sigma 1} = \left( t\cos\alpha_n - \dfrac{t^2}{2A}\sin\alpha_n + (\dfrac{\rho\sin^2\alpha}{2\cos\alpha} + A)\sin\alpha_n \right)\sin\phi_1 \\ \qquad + \left( t\sin\alpha_n + \dfrac{t^2}{2A}\cos\alpha_n - (\dfrac{\rho\sin^2\alpha}{2\cos\alpha} + A)\cos\alpha_n \right)\cos\beta\cos\phi_1 + r_1\sin\phi_1 \\ z_{\Sigma 1} = r_1\phi_1\cot\beta - \left( t\sin\alpha_n + \dfrac{t^2}{2A}\cos\alpha_n - (\dfrac{\rho\sin^2\alpha}{2\cos\alpha} + A)\cos\alpha_n \right)\sin\beta \end{cases} \quad ;$$

the equation of the surface $\Sigma_2'$ is:

$$\begin{cases} x_{\Sigma 2} = \left(\rho\sin\alpha + X\right)\cos\phi_1 - \left(-\rho\cos\alpha + L\right)\cos\beta\sin\phi_1 + r_1\cos\phi_1 \\ y_{\Sigma 2} = \left(\rho\sin\alpha + X\right)\sin\phi_1 - \rho\cos\alpha + L\cos\beta\cos\phi_1 + r_1\sin\phi_1 \\ z_{\Sigma 2} = r_1\phi_1\cot\beta + \rho\cos\alpha + L\sin\beta \end{cases}$$

where $\phi_1$ is a gear rotation angle, $r_1$ is a radius of a gear pitch cylinder, $\beta$ is a helix angle of a gear tooth. If a centre of a circle of the tooth profile is located outside the gear pitch cylinder, $X$ is positive, and if the centre of the circle of the tooth profile is located inside the gear pitch cylinder, $X$ is negative; if the centre of the circle of the tooth profile is located at a different side of a tooth shape symmetry axis, $L$ is positive, and if the centre of the circle of the tooth profile is located at a same side of the tooth shape symmetry axis, $L$ is negative;

the equation of the surface $\Sigma_3'$ is:

$$
\begin{cases}
\begin{aligned}
x_{\Sigma 3} = {} & \left( t'\cos\alpha_n - \frac{t'^2}{2A'}\sin\alpha_n + (\frac{\rho\sin^2\alpha}{2\cos\alpha} + A')\sin\alpha_n \right)\cos\phi_1 \\
& - \left( t'\sin\alpha_n + \frac{t'^2}{2A'}\cos\alpha_n - (\frac{\rho\sin^2\alpha}{2\cos\alpha} + A')\cos\alpha_n \right)\cos\beta\sin\phi_1 + r_1\cos\phi_1 \\
y_{\Sigma 3} = {} & \left( t'\cos\alpha_n - \frac{t'^2}{2A'}\sin\alpha_n + (\frac{\rho\sin^2\alpha}{2\cos\alpha} + A')\sin\alpha_n \right)\sin\phi_1 \\
& + \left( t'\sin\alpha_n + \frac{t'^2}{2A'}\cos\alpha_n - (\frac{\rho\sin^2\alpha}{2\cos\alpha} + A')\cos\alpha_n \right)\cos\beta\cos\phi_1 + r_1\sin\phi_1 \\
z_{\Sigma 3} = {} & r_1\phi_1\cot\beta - \left( t'\sin\alpha_n + \frac{t'^2}{2A'}\cos\alpha_n - (\frac{\rho\sin^2\alpha}{2\cos\alpha} + A')\cos\alpha_n \right)\sin\beta
\end{aligned}
\end{cases}
\tag{.}
$$

The advantageous effects of the present invention are: the multipoint contact cylindrical gear pair based on conjugate curves of the present invention is that the convex gear and the concave gear arc simultaneously in multipoint contact, all the contact traces of the contact points on respective tooth profiles are smooth space curve. Such transmission inherits meshing characteristics of conjugate curves, and the tooth profile of point contact has high contact strength, large load capacity, a high transmission efficiency, a low temperature rise of lubricating oil, a greatly decreased sliding rate, a small abrasion. Meanwhile, according to different use requirements, different contact curves may be applied to achieve one-point, two-point or multipoint contact at the same time when gears mesh. This solves a limitation where existing point contact gears, in which all the adopted tooth profile are spherical tubular enveloping surfaces in which a centre of a sphere is in curvilinear motion along a centre of a circle, have only one-point contact when they mesh. Therefore, the multipoint contact cylindrical gear drive is a kind of high performance gear transmission which has a broad prospect of application.

DRAWINGS

Hereinafter, the present invention is further described in conjunction with drawings and embodiments:

Figure 1 is a diagram of a tooth profile structure of a cylindrical gear which has three-point contact of the present invention;

Figure 2 is a diagram of meshing of a cylindrical gear which has three-point contact of the present invention;

Figure 3 is a diagram of derivation of a tooth profile of a cylindrical gear which has three-point contact of the present invention;

Figure 4 is a diagram of a tooth profile structure of a cylindrical gear which has local four-point contact of the present invention;

Figure 5 is a diagram of meshing of a cylindrical gear which has local four-point contact of the present invention;

Figure 6 is a diagram of a tooth profile structure of a cylindrical gear which has four-point symmetric contact in a tooth width direction of the present invention;

Figure 7 is a diagram of meshing of a cylindrical gear which has four-point symmetric contact in a tooth width direction of the present invention;

Figure 8 is a diagram of derivation of a tooth profile of a cylindrical gear which has four-point contact of the present invention;

Figure 9 is a diagram of a tooth profile structure of a cylindrical gear which has five-point symmetric contact of the present invention;

Figure 10 is a diagram of meshing of a cylindrical gear which has five-point symmetric contact of the present invention;

Figure 11 is a diagram of derivation of a tooth profile of a cylindrical gear which has five-point symmetric contact of the present invention;

DETAILED DESCRIPTION

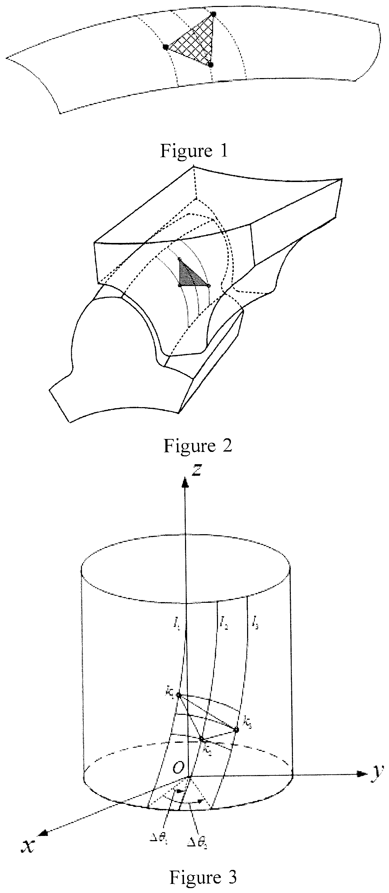

In an embodiment as shown in Figures 1, 2 and 3, three-segment tooth profile curves which are circular arc curves are selected within local different cross-sections of a tooth profile, an optimum point-contact pressure angle is determined to achieve a general distribution three-point contact at different cross-sections. As shown in Figures 1 and 2, a convex tubular meshing tooth surface and a concave tubular meshing tooth surface constructed based on a conjugate curve meshing theory form a meshing pair, the meshing pair moves along the contact point trace in an axial direction, both of them take on general three-point contact within local different cross-sections of the tooth profile;

a cylindrical helix curve is selected as a conjugate contact curve of tooth profile. As shown in Figure 3, in a space coordinate system, $l_1$, $l_2$ and $l_3$ are three helical curves on a cylindrical surface, the curve $l_2$ rotating around a center axis relative to the curve $l_1$ by an angle $\Delta\theta_1$, is met, the curve $l_3$ rotating around the center axis relative to the curve $l_1$ by an angle $\Delta\theta_2$ is met.

Assuming that the equation of the cylindrical helix curve $l_1$ is $\begin{cases} x_1 = r\cos\theta_1 \\ y_1 = r\sin\theta_1 \\ z_1 = p\theta_1 \end{cases}$ wherein $r$ denotes a radius of the cylindrical helix curve $l_1$, $\theta_1$ denotes a curve parameter of the cylindrical helix curve $l_1$, its value range is $\theta_{1i} \le \theta_1 \le \theta_{1o}$, $p$ denotes a helix parameter.

The curve $l_2$ rotates around the center axis relative to the curve $l_1$ by the angle $\Delta\theta_1$, and based on a coordinate transformation matrix, the equation of the cylindrical helix curve $l_2$ is obtained as $\begin{cases} x_2 = r\cos(\theta_1 - \Delta\theta_1) \\ y_2 = r\sin(\theta_1 - \Delta\theta_1) \\ z_2 = p\theta_1 \end{cases}$

Likewise, the curve $l_3$ rotates around the center axis relative to the curve $l_1$ by the angle $\Delta\theta_2$, and based on a coordinate transformation matrix, the equation of the cylindrical helix curve $l_3$ is obtained as $\begin{cases} x_3 = r\cos(\theta_1 - \Delta\theta_2) \\ y_3 = r\sin(\theta_1 - \Delta\theta_2) \\ z_3 = p\theta_1 \end{cases}$

Motion traces of the three contact points on the tooth profile are cylindrical helix curves $l_1$, $l_2$ and $l_3$. Especially, it is noted that the three contact points being not within a same cross-section should be met, namely a different cross-section distribution is taken on, the tooth profile mainly includes three-segment surfaces:

(1) the expression of the cylindrical helix curve $l_1$ is known, and based on a generation theory and method of the meshing tubular tooth surface, an equation of a surface $\Sigma_1$ formed by the curve $l_1$ may be obtained as

$$\begin{cases} x_{\Sigma 1} = r\cos\theta_1 \pm h_1 n_{x1} + h_1\cos\varphi_1\cos\alpha_1 \\ y_{\Sigma 1} = r\sin\theta_1 \pm h_1 n_{y1} + h_1\cos\varphi_1\sin\alpha_1 \\ z_{\Sigma 1} = p\theta_1 \pm h_1 n_{z1} + h_1\sin\varphi_1 \\ \Phi(\theta_1,\varphi_1,\alpha_1) = (\boldsymbol{r}_{\theta_1},\boldsymbol{r}_{\varphi_1},\boldsymbol{r}_{\alpha_1}) = 0 \end{cases}$$

where

$$r_{\theta_1} = \{-r\sin\theta_1 \pm h_1 n_{x1}(\theta_1), r\cos\theta_1 \pm h_1 n_{y1}(\theta_1), p \pm h_1 n_{z1}(\theta_1)\}$$

$$r_{\varphi} = \{-h_1\sin\varphi_1\cos\alpha_1, -h_1\sin\varphi_1\sin\alpha_1, h_1\cos\varphi_1\}$$ wherein the symbol "±" denotes that a convex

$$r_{\alpha} = \{-h_1\cos\varphi_1\sin\alpha_1, h_1\cos\varphi_1\cos\alpha_1, 0\}$$

tubular meshing tooth surface and a concave tubular meshing tooth surface may be formed respectively, $h_1$ denotes a radius of the formed meshing tubular tooth surface, $n_{x1}$, $n_{y1}$ and $n_{z1}$ denote components in directions of respective coordinate axes of a normal vector at a position where the segment of the meshing tubular tooth surface passes the contact point respectively, parameters $\varphi_1$ and $\alpha_1$ denote general sphere $L_1$ parameters respectively.

(2) the expression of the cylindrical helix curve $l_2$ is known, and based on a generation theory and method of the meshing tubular tooth surface, an equation of a surface $\Sigma_2$ formed by the curve $l_2$ may be obtained as

$$\begin{cases} x_{\Sigma 2} = r\cos\theta_2 \pm h_2 n_{x2} + h_2\cos\varphi_2\cos\alpha_2 \\ y_{\Sigma 2} = r\sin\theta_2 \pm h_2 n_{y2} + h_2\cos\varphi_2\sin\alpha_2 \\ z_{\Sigma 2} = p(\theta_2 + \Delta\theta_1) \pm h_2 n_{z2} + h_2\sin\varphi_2 \\ \Phi(\theta_2, \varphi_2, \alpha_2) = (r_{\theta_2}, r_{\varphi_2}, r_{\alpha_2}) = 0 \\ \theta_2 = \theta_1 - \Delta\theta_1 \end{cases}$$ where

$$r_{\theta_2} = \{-r\sin\theta_2 \pm h_2 n_{x2}(\theta_2), r\cos\theta_2 \pm h_2 n_{y2}(\theta_2), p \pm h_2 n_{z2}(\theta_2)\}$$

$$r_{\varphi_2} = \{-h_2\sin\varphi_2\cos\alpha_2, -h_2\sin\varphi_2\sin\alpha_2, h_2\cos\varphi_2\}$$ wherein the symbol "±" denotes that a con-

$$r_{\alpha_2} = \{-h_2\cos\varphi_2\sin\alpha_2, h_2\cos\varphi_2\cos\alpha_2, 0\}$$

vex tubular meshing tooth surface and a concave tubular meshing tooth surface may be formed respectively, $h_2$ denotes a radius of the formed meshing tubular tooth surface, $n_{x2}$, $n_{y2}$ and $n_{z2}$ denote components in directions of respective coordinate axes of a normal vector at a position where the segment of the meshing tubular tooth surface passes the contact point respectively, parameters $\varphi_2$ and $\alpha_2$ denote general sphere $L_2$ parameters respectively.

(3) the expression of the cylindrical helix curve $l_3$ is known, and based on a generation theory and method of the meshing tubular tooth surface, an equation of a surface $\Sigma_3$ formed by the curve $l_3$ may be obtained as

$$\begin{cases} x_{\Sigma 3} = r\cos\theta_3 \pm h_3 n_{x3} + h_3\cos\varphi_3\cos\alpha_3 \\ y_{\Sigma 3} = r\sin\theta_3 \pm h_3 n_{y3} + h_3\cos\varphi_3\sin\alpha_3 \\ z_{\Sigma 3} = p(\theta_3 + \Delta\theta_2) \pm h_3 n_{z3} + h_3\sin\varphi_3 \\ \Phi(\theta_3, \varphi_3, \alpha_3) = (r_{\theta_3}, r_{\varphi_3}, r_{\alpha_3}) = 0 \\ \theta_3 = \theta_1 - \Delta\theta_2 \end{cases}$$ where

$$r_{\theta_3} = \{-r\sin\theta_3 \pm h_3 n_{x3}(\theta_3), r\cos\theta_3 \pm h_3 n_{y3}(\theta_3), p \pm h_3 n_{z3}(\theta_3)\}$$

$$r_{\varphi_3} = \{-h_3\sin\varphi_3\cos\alpha_3, -h_3\sin\varphi_3\sin\alpha_3, h_3\cos\varphi_3\}$$ wherein the symbol "±" denotes that a con-

$$r_{\alpha_3} = \{-h_3\cos\varphi_3\sin\alpha_3, h_3\cos\varphi_3\cos\alpha_3, 0\}$$

vex tubular meshing tooth surface and a concave tubular meshing tooth surface may be formed respectively, $h_3$ denotes a radius of the formed meshing tubular tooth surface, $n_{x3}$, $n_{y3}$ and $n_{z3}$ denote components in directions of respective coordinate axes of a normal vector at a position where the segment of the meshing tubular tooth surface passes the contact point respectively, parameters $\varphi_3$ and $\alpha_3$ denote general sphere $L_3$ parameters respectively.

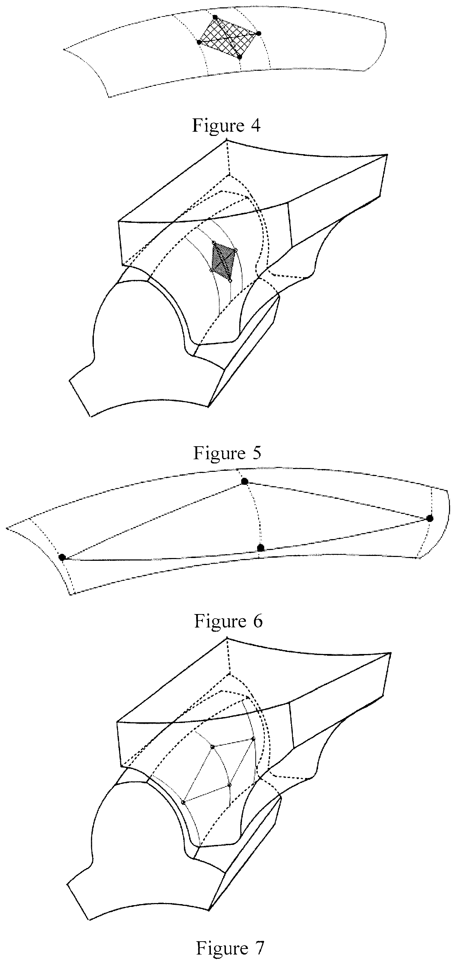

In another embodiment as shown Figures 4 and 5, three-segment tooth profile curves are selected within local different cross-sections of a tooth surface, the first and the last segments of tooth profile curves are circular arc curves, the middle tooth profile curve is a quadric parabolic curve, an optimum point-contact pressure angle is determined to achieve local four-point symmetrical contact. As shown in Figure 5, a convex tubular meshing tooth surface and a concave tubular meshing tooth surface constructed based on a conjugate curve meshing theory form a meshing pair, the meshing pair moves along the contact point trace in an axial direction, both of them take on local four-point symmetrical contact within local different cross sections of the tooth profile.

In another embodiment as shown Figures 6 and 7, different-segment tooth profile curves are selected within different cross-sections of a tooth surface in a tooth width direction, the first and the last segments of tooth profile curves are circular arc curves, the middle tooth profile curve is a quadric parabolic curve, an optimum point-contact pressure angle is determined to achieve four-point symmetrical contact in a tooth width direction. As shown in Figure 7, a convex tubular meshing tooth surface and a concave tubular meshing tooth surface constructed based on a conjugate curve meshing theory form a meshing pair, the meshing pair moves along the contact point trace in an axial direction, both of them take on four-point symmetrical contact in a tooth width direction.

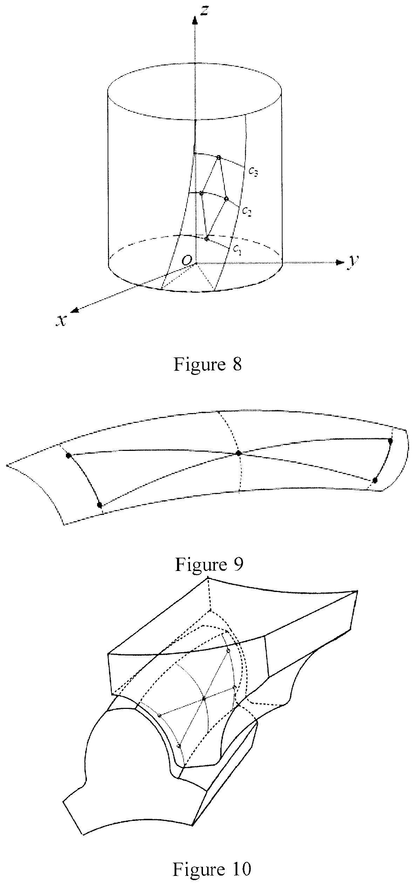

As shown in Figure 8, three-segment tooth profile curves are selected on the tooth surface of the gear tooth, wherein the first and the last segments of tooth profile curves are circular arc curves, the middle tooth profile curve is a quadric parabolic curve. In a process of meshing, the circular arc profile has single point contact within respective cross-section region, the parabolic profile has two point-contact within its cross-section region, the meshing pair constitutes a four-point contact state.

(1) convex tooth profile

Each convex tooth surface adopts a circular arc profile, the general equation of its tooth profile may refer to the meshing tubular tooth surface formation method, and it is further expressed as

$$
\begin{cases}
x_c = r_c \cos \theta_c + h_{1c} n_{x1c} + h_{1c} \cos \varphi_c \cos \alpha_c \\
y_c = r_c \sin \theta_c + h_{1c} n_{y1c} + h_{1c} \cos \varphi_c \sin \alpha_c \\
z_c = p_c \theta_c + h_{1c} n_{z1c} + h_{1c} \sin \varphi_c \\
\Phi(\theta_c, \varphi_c, \alpha_c) = (r_{\theta_c}, r_{\varphi_c}, r_{\alpha_c}) = 0
\end{cases}
$$
where

$$r_{\theta_c} = \{-r_c \sin \theta_c + h_{1c} n_{x1c}(\theta_c), r_c \cos \theta_c + h_{1c} n_{y1c}(\theta_c), p_c + h_{1c} n_{z1c}(\theta_c)\}$$

$$r_{\varphi_c} = \{-h_{1c} \sin \varphi_c \cos \alpha_c, -h_{1c} \sin \varphi_c \sin \alpha_c, h_{1c} \cos \varphi_c\}$$
wherein $r_c$ denotes a radius of a cylinder

$$r_{\alpha_c} = \{-h_{1c} \cos \varphi_c \sin \alpha_c, h_{1c} \cos \varphi_c \cos \alpha_c, 0\}$$

where the cylinder helix curve is located, $\theta_c$ denotes a curve parameter of the cylinder helix, $p_c$ denotes a helix parameter; $h_{1c}$ denotes a radius of the meshing tubular tooth surface, $n_{x1c}$, $n_{y1c}$ and $n_{z1c}$ denote components in directions of respective coordinate axes of a normal vector at a position where the segment of the meshing tubular tooth surface passes the contact point respectively, parameters $\varphi_c$ and $\alpha_c$ denote general sphere parameters respectively .

(2) concave tooth profile

A concave tooth profile is formed by three parts which include a circular arc profile $c_1$, parabolic profile $c_2$ and circular arc profile $c_3$.

1) the equation of the circular arc tooth profile $c_1$

assuming that the circular arc tooth profile $c_1$ is expressed as
$$
\begin{cases}
x_{c1} = \rho \cos \alpha + X \\
y_{c1} = \rho \sin \alpha + L \\
z_{c1} = 0
\end{cases}
$$
wherein $\rho$ denotes a radius

of the circular arc tooth profile; $\alpha$ denotes a tooth profile angle, which decides the position of the contact point in the circular arc; $X$, $L$ denote the distances between the center of the circular arc and the y, x axes in the coordinate system, respectively.

A kinematics method of gear meshing theory is adopted to derive the tooth profile equation, the tooth surface $\Sigma_1$ equation formed by the normal circular arc tooth profile $c_1$ being in helical motion is

$$\begin{cases} x_{\Sigma 1} = \left(\rho \sin\alpha + X\right)\cos\phi_1 - \left(-\rho\cos\alpha + L\right)\cos\beta\sin\phi_1 + r_1\cos\phi_1 \\ y_{\Sigma 1} = \left(\rho\sin\alpha + X\right)\sin\phi_1 - \rho\cos\alpha + L\cos\beta\cos\phi_1 + r_1\sin\phi_1 \\ z_{\Sigma 1} = r_1\phi_1\cot\beta + \rho\cos\alpha + L\sin\beta \end{cases}$$

where $\phi_1$ is a gear rotation angle, $r_1$ is a radius of a gear pitch cylinder, $\beta$ is a helix angle of a gear tooth. If a centre of a circle of the tooth profile is located outside the gear pitch cylinder, $X$ is positive, and if the centre of the circle of the tooth profile is located inside the gear pitch cylinder, $X$ is negative; if the centre of the circle of the tooth profile is located at a different side of a tooth shape symmetry axis, $L$ is positive, and if the centre of the circle of the tooth profile is located at a same side of the tooth shape symmetry axis, $L$ is negative.

2) the equation of the quadratic parabolic tooth profile $c_2$

assuming that the quadratic parabolic tooth profile $c_2$ is expressed as $\begin{cases} x_{c2} = t \\ y_{c2} = \dfrac{t^2}{2A} \\ z_{c2} = 0 \end{cases}$ where $t$ is an independent variable parameter; $A$ is a parabolic parameter, and $A = \rho\cos\alpha$.

Likewise, the tooth surface $\Sigma_2$ equation formed by the quadratic parabolic tooth profile being in helical motion is

$$\begin{cases} x_{\Sigma 2} = \left(t\cos\alpha_n - \dfrac{t^2}{2A}\sin\alpha_n + (\dfrac{\rho\sin^2\alpha}{2\cos\alpha} + A)\sin\alpha_n\right)\cos\phi_1 \\ \qquad - \left(t\sin\alpha_n + \dfrac{t^2}{2A}\cos\alpha_n - (\dfrac{\rho\sin^2\alpha}{2\cos\alpha} + A)\cos\alpha_n\right)\cos\beta\sin\phi_1 + r_1\cos\phi_1 \\ y_{\Sigma 2} = \left(t\cos\alpha_n - \dfrac{t^2}{2A}\sin\alpha_n + (\dfrac{\rho\sin^2\alpha}{2\cos\alpha} + A)\sin\alpha_n\right)\sin\phi_1 \\ \qquad + \left(t\sin\alpha_n + \dfrac{t^2}{2A}\cos\alpha_n - (\dfrac{\rho\sin^2\alpha}{2\cos\alpha} + A)\cos\alpha_n\right)\cos\beta\cos\phi_1 + r_1\sin\phi_1 \\ z_{\Sigma 2} = r_1\phi_1\cot\beta - \left(t\sin\alpha_n + \dfrac{t^2}{2A}\cos\alpha_n - (\dfrac{\rho\sin^2\alpha}{2\cos\alpha} + A)\cos\alpha_n\right)\sin\beta \end{cases}$$

3) the equation of the circular arc tooth profile $c_3$

the derivation method of equation of the circular arc tooth profile $c_3$ is the same as that of equation of the circular arc tooth profile $c_1$, assuming that the circular arc tooth profile $c_3$ is expressed as $\begin{cases} x_{c3} = \rho'\cos\alpha' + X' \\ y_{c3} = \rho'\sin\alpha' + L' \\ z_{c3} = 0 \end{cases}$ wherein

$\rho'$ denotes a radius of the circular arc tooth profile; $\alpha'$ denotes a tooth profile angle, which decides the position of the contact point in the circular arc; $X'$, $L'$ denote distances between the center of the circular arc and the y, x axes in the coordinate system respectively.

A kinematics method of gear meshing theory is adopted to derive the tooth profile equation, the tooth surface $\Sigma_3$ equation formed by the normal circular arc tooth profile $c_3$ being in helical motion is

$$\begin{cases} x_{\Sigma 3} = \left(\rho'\sin\alpha' + X'\right)\cos\phi_1 - \left(-\rho'\cos\alpha' + L'\right)\cos\beta\sin\phi_1 + r_1\cos\phi_1 \\ y_{\Sigma 3} = \left(\rho'\sin\alpha' + X'\right)\sin\phi_1 - \rho'\cos\alpha' + L'\cos\beta\cos\phi_1 + r_1\sin\phi_1 \\ z_{\Sigma 3} = r_1\phi_1\cot\beta + \rho'\cos\alpha' + L'\sin\beta \end{cases}$$

in the equation, $\phi_1$ is a gear rotation angle, $r_1$ is a radius of a gear pitch cylinder, $\beta$ is a helix angle of a gear tooth. If a centre of a circle of the tooth profile is located outside the gear pitch cylinder, $X'$ is positive, and if the centre of the circle of the tooth profile is located inside the gear pitch cylinder, $X'$ is negative; if the centre of the circle of the tooth profile is located at a different side of a tooth shape symmetry axis, $L'$ is positive, and if the centre of the circle of the tooth profile is located at a same side of the tooth shape symmetry axis, $L'$ is negative.

Based on the aforementioned contents, when the two segments of circular arc tooth profiles and the middle quadratic parabolic tooth profile are distributed closely, it is possible to achieve local four-point symmetrical contact; when the two segments of circular arc tooth profiles and the middle quadratic parabolic tooth profile are distributed in the full tooth width direction, it is possible to achieve four-point symmetrical contact in the full tooth width direction.

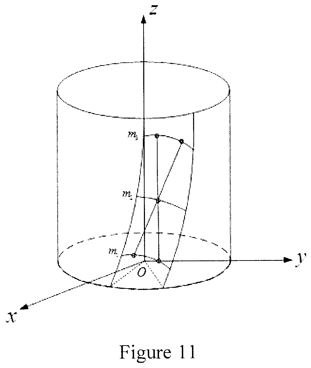

In an embodiment as shown Figures 9, 10 and 11, different segments of tooth profile curves are selected within different cross-sections of the tooth profile in the tooth width direction, the first and the last segments of tooth profile curves are quadric parabolic curves, the middle tooth profile curve is a circular arc curve, an optimum point-contact pressure angle is determined to achieve symmetrical five-point contact in the tooth width direction. As shown in Figure 10, a convex tubular meshing tooth surface and a concave tubular meshing tooth surface constructed based on a conjugate curve meshing theory form a meshing pair, the meshing pair moves along a contact point trace in an axial direction, both of them take on five-point symmetrical contact in the tooth width direction.

tooth profile equation:

three-segment tooth profile curves are selected on the gear tooth, wherein the first and the last segments of tooth profile curves are quadric parabolic curves, the middle tooth profile curve is a circular arc curve. In a meshing process, the circular arc tooth profile has single point contact within respective cross-section region, the parabolic profile has two points contact within its cross-section region, the meshing pair constitutes a five-point contact state.

(1) convex tooth surface

Each convex tooth profile still adopts a circular arc form, the equation of its tooth profile refers to the generation method of meshing tubular tooth surface, and it is expressed as

$$
\begin{cases}
x_m = r_m \cos\theta_m + h_{1m} n_{x1m} + h_{1m}\cos\varphi_m \cos\alpha_m \\
y_m = r_m \sin\theta_m + h_{1m} n_{y1m} + h_{1m}\cos\varphi_m \sin\alpha_m \\
z_m = p_m\theta_m + h_{1m} n_{z1m} + h_{1m}\sin\varphi_m \\
\mathbf{\Phi}(\theta_m,\varphi_m,\alpha_m) = (\mathbf{r}_{\theta_m}, \mathbf{r}_{\varphi_m}, \mathbf{r}_{\alpha_m}) = 0
\end{cases}
$$

in the equation,

$$
\mathbf{r}_{\theta_m} = \{-r_m\sin\theta_m + h_{1m}n_{x1m}(\theta_m), r_m\cos\theta_m + h_{1m}n_{y1m}(\theta_m), p_m + h_{1m}n_{z1m}(\theta_m)\}
$$

$$
\mathbf{r}_{\varphi_m} = \{-h_{1m}\sin\varphi_m\cos\alpha_m, -h_{1m}\sin\varphi_m\sin\alpha_m, h_{1m}\cos\varphi_m\}
$$

$$
\mathbf{r}_{\alpha_m} = \{-h_{1m}\cos\varphi_m\sin\alpha_m, h_{1m}\cos\varphi_m\cos\alpha_m, 0\}
$$

wherein $r_m$ denotes a radius of a cylinder where the cylindrical helix curve is located, $\theta_m$ denotes a curve parameter of the cylindrical helix, $p_m$ denotes a helix parameter; $h_{1m}$ denotes a radius of the meshing tubular tooth surface, $n_{x1m}$, $n_{y1m}$ and $n_{z1m}$ denote components in directions of respective coordinate axes of a normal vector at a position where the segment of the meshing tubular tooth surface passes the contact point respectively, parameters $\varphi_m$ and $\alpha_m$ denote general sphere parameters respectively.

(2) concave tooth profile

a concave tooth profile is formed by three parts which include a quadratic parabolic $m_1$, a circular arc $m_2$ and a quadratic parabolic $m_3$.

1) the equation of the quadratic parabolic tooth profile $m_1$

assuming that the quadratic parabolic tooth profile $m_1$ is expressed as $\begin{cases} x_{m1} = t \\ y_{m1} = \dfrac{t^2}{2A} \\ z_{m1} = 0 \end{cases}$ in the equation, $t$ is an independent variable parameter; $A$ is a parabolic parameter, and $A = \rho\cos\alpha$.

Likewise, the tooth surface $\Sigma_1$ equation formed by the quadratic parabolic tooth profile being in helical motion is

$$
\begin{cases}
\begin{aligned}
x_{\Sigma 1} = {}& \left( t\cos\alpha_n - \frac{t^2}{2A}\sin\alpha_n + (\frac{\rho\sin^2\alpha}{2\cos\alpha} + A)\sin\alpha_n \right)\cos\phi_1 \\
& - \left( t\sin\alpha_n + \frac{t^2}{2A}\cos\alpha_n - (\frac{\rho\sin^2\alpha}{2\cos\alpha} + A)\cos\alpha_n \right)\cos\beta\sin\phi_1 + r_1\cos\phi_1 \\
y_{\Sigma 1} = {}& \left( t\cos\alpha_n - \frac{t^2}{2A}\sin\alpha_n + (\frac{\rho\sin^2\alpha}{2\cos\alpha} + A)\sin\alpha_n \right)\sin\phi_1 \\
& + \left( t\sin\alpha_n + \frac{t^2}{2A}\cos\alpha_n - (\frac{\rho\sin^2\alpha}{2\cos\alpha} + A)\cos\alpha_n \right)\cos\beta\cos\phi_1 + r_1\sin\phi_1 \\
z_{\Sigma 1} = {}& r_1\phi_1\cot\beta - \left( t\sin\alpha_n + \frac{t^2}{2A}\cos\alpha_n - (\frac{\rho\sin^2\alpha}{2\cos\alpha} + A)\cos\alpha_n \right)\sin\beta
\end{aligned}
\end{cases}
$$

2) the equation of the circular arc tooth profile $m_2$

assuming that the circular arc tooth profile $m_2$ is expressed as $\begin{cases} x_{m2} = \rho\cos\alpha + X \\ y_{m2} = \rho\sin\alpha + L \\ z_{m2} = 0 \end{cases}$ wherein $\rho$ denotes a

radius of the circular arc profile; $\alpha$ denotes a tooth profile angle, which decides the position of the contact point in the circular arc; $X, L$ denote distances between the center of the circular arc and the y, x axes in the coordinate system respectively.

A kinematics method of gear meshing theory is adopted to derive the tooth profile equation, the tooth surface $\Sigma_2$ equation formed by the normal circular arc tooth profile $c_1$ being in helical motion is

$$
\begin{cases}
x_{\Sigma 2} = \left( \rho\sin\alpha + X \right)\cos\phi_1 - \left( -\rho\cos\alpha + L \right)\cos\beta\sin\phi_1 + r_1\cos\phi_1 \\
y_{\Sigma 2} = \left( \rho\sin\alpha + X \right)\sin\phi_1 - \rho\cos\alpha + L\cos\beta\cos\phi_1 + r_1\sin\phi_1 \\
z_{\Sigma 2} = r_1\phi_1\cot\beta + \rho\cos\alpha + L\sin\beta
\end{cases}
$$

where $\phi_1$ is a gear rotation angle, $r_1$ is a radius of a gear pitch cylinder, $\beta$ is a helix angle of a gear tooth. If a centre of a circle of the tooth profile is located outside the gear pitch cylinder, $X$ is positive, and if the centre of the circle of the tooth profile is located inside the gear pitch cylinder, $X$ is negative; if the centre of the circle of the tooth profile is located at a different side of a tooth shape symmetry axis, $L$ is positive, and if the centre of the circle of the tooth profile is located at a same side of the tooth shape symmetry axis, $L$ is negative.

3) the equation of the quadratic parabolic tooth profile $m_3$

assuming that the quadratic parabolic tooth profile $m_3$ is expressed as $\begin{cases} x_{m3} = t' \\ y_{m3} = \dfrac{t'^2}{2A'} \\ z_{m3} = 0 \end{cases}$ in the equation, $t'$ is an independent variable parameter; $A'$ is a parabolic parameter, and $A' = \rho\cos\alpha$.

Likewise, the tooth surface $\Sigma_3$ equation formed by the quadratic parabolic tooth profile being in helical motion is

$$
\begin{cases}
x_{\Sigma 3} = \left( t'\cos\alpha_n - \dfrac{t'^2}{2A'}\sin\alpha_n + (\dfrac{\rho\sin^2\alpha}{2\cos\alpha} + A')\sin\alpha_n \right)\cos\phi_1 \\[2mm]
\qquad - \left( t'\sin\alpha_n + \dfrac{t'^2}{2A'}\cos\alpha_n - (\dfrac{\rho\sin^2\alpha}{2\cos\alpha} + A')\cos\alpha_n \right)\cos\beta\sin\phi_1 + r_1\cos\phi_1 \\[2mm]
y_{\Sigma 3} = \left( t'\cos\alpha_n - \dfrac{t'^2}{2A'}\sin\alpha_n + (\dfrac{\rho\sin^2\alpha}{2\cos\alpha} + A')\sin\alpha_n \right)\sin\phi_1 \\[2mm]
\qquad + \left( t'\sin\alpha_n + \dfrac{t'^2}{2A'}\cos\alpha_n - (\dfrac{\rho\sin^2\alpha}{2\cos\alpha} + A')\cos\alpha_n \right)\cos\beta\cos\phi_1 + r_1\sin\phi_1 \\[2mm]
z_{\Sigma 3} = r_1\phi_1\cot\beta - \left( t'\sin\alpha_n + \dfrac{t'^2}{2A'}\cos\alpha_n - (\dfrac{\rho\sin^2\alpha}{2\cos\alpha} + A')\cos\alpha_n \right)\sin\beta
\end{cases}
$$

Finally, it is to be explained that, the above embodiments are only used to explain the technical solutions of the present invention, but not to limit the present invention. Although the present invention is explained in detail with reference to preferred embodiments, those ordinary skilled in the art should understand that, without departing from the scope of the technical solutions of the present invention, modifications or equivalent substitutions may be made to the technical solutions of the present invention, which are to be covered by the scope of the claim of the present invention.

**Claims**

1. A multipoint contact cylindrical gear meshing pair based on conjugate curves, comprising:

   a convex gear and a concave gear which point contact mutually and have multiple meshing points,
   wherein the meshing tooth profiles of the convex gear and the concave gear are tubular surfaces,
   **characterized in that**
   the number of the meshing points of the convex gear and the concave gear is 3 and the multiple meshing points of the convex gear and the concave gear are distributed on different cross-sections of tooth profiles thereof,
   wherein three contact curves formed by the meshing points on the tooth profiles of the convex gear or the concave gear are a contact curve $l_1$, a contact curve $l_2$ and a contact curve $l_3$ respectively;

   the equation of the contact curve $l_1$ is:
   $$\begin{cases} x_1 = r\cos\theta_1 \\ y_1 = r\sin\theta_1 \\ z_1 = p\theta_1 \end{cases}$$

   wherein $r$ is a radius of the cylindrical helix curve $l_1$, $\theta_1$ is a curve parameter of the cylindrical helix curve $l_1$, its value range is $\theta_{1i} \le \theta_1 \le \theta_{1o}$, $p$ is a helix parameter;

   the equation of the contact curve $l_2$ is:
   $$\begin{cases} x_2 = r\cos(\theta_1 - \Delta\theta_1) \\ y_2 = r\sin(\theta_1 - \Delta\theta_1) \\ z_2 = p\theta_1 \end{cases}$$

   wherein $r$ is a radius of the cylindrical helix curve $l_1$, $\theta_1$ is a curve parameter of the cylindrical helix curve $l_1$, its value range is $\theta_{1i} \le \theta_1 \le \theta_{1o}$, $p$ is a helix parameter;

   the equation of the contact curve $l_3$ is:
   $$\begin{cases} x_3 = r\cos(\theta_1 - \Delta\theta_2) \\ y_3 = r\sin(\theta_1 - \Delta\theta_2) \\ z_3 = p\theta_1 \end{cases}$$

   wherein $r$ is a radius of the cylindrical helix curve $l_1$, $\theta_1$ is a curve parameter of the cylindrical helix curve $l_1$, its

value range is $\theta_{1i} \le \theta_1 \le \theta_{1o}$, $p$ is a helix parameter,
wherein the tooth profile of the convex gear includes a surface $\Sigma_1$, a surface $\Sigma_2$ and a surface $\Sigma_3$ ; the tooth

profile of the concave gear includes a surface $\Sigma_1'$ , a surface $\Sigma_2'$ and a surface $\Sigma_3'$ ;

the equation of the surface $\Sigma_1$ is:
$$\begin{cases} x_{\Sigma1} = r\cos\theta_1 + h_1 n_{x1} + h_1 \cos\varphi_1 \cos\alpha_1 \\ y_{\Sigma1} = r\sin\theta_1 + h_1 n_{y1} + h_1 \cos\varphi_1 \sin\alpha_1 \\ z_{\Sigma1} = p\theta_1 + h_1 n_{z1} + h_1 \sin\varphi_1 \\ \Phi(\theta_1,\varphi_1,\alpha_1) = (r_{\theta_1}, r_{\varphi_1}, r_{\alpha_1}) = 0 \end{cases}$$

$$r_{\theta_1} = \{-r\sin\theta_1 + h_1 n_{x1}(\theta_1), r\cos\theta_1 + h_1 n_{y1}(\theta_1), p + h_1 n_{z1}(\theta_1)\}$$

in the equation, $r_{\varphi} = \{-h_1 \sin\varphi_1 \cos\alpha_1, -h_1 \sin\varphi_1 \sin\alpha_1, h_1 \cos\varphi_1\}$

$$r_{\alpha} = \{-h_1 \cos\varphi_1 \sin\alpha_1, h_1 \cos\varphi_1 \cos\alpha_1, 0\}$$

wherein $h_1$ is a radius of the tooth profile, $n_{x1}$, $n_{y1}$ and $n_{z1}$ denote components in directions of respective coordinate axes of a normal vector at a position where the segment of the tooth profile passes the contact point respectively, parameters $\varphi_1$ and $\alpha_1$ denote general sphere $L_1$ parameters respectively;

the equation of the surface $\Sigma_2$ is:
$$\begin{cases} x_{\Sigma2} = r\cos\theta_2 + h_2 n_{x2} + h_2 \cos\varphi_2 \cos\alpha_2 \\ y_{\Sigma2} = r\sin\theta_2 + h_2 n_{y2} + h_2 \cos\varphi_2 \sin\alpha_2 \\ z_{\Sigma2} = p(\theta_2 + \Delta\theta_1) + h_2 n_{z2} + h_2 \sin\varphi_2 \\ \Phi(\theta_2,\varphi_2,\alpha_2) = (r_{\theta_2}, r_{\varphi_2}, r_{\alpha_2}) = 0 \\ \theta_2 = \theta_1 - \Delta\theta_1 \end{cases}$$

$$r_{\theta_2} = \{-r\sin\theta_2 + h_2 n_{x2}(\theta_2), r\cos\theta_2 + h_2 n_{y2}(\theta_2), p + h_2 n_{z2}(\theta_2)\}$$

in the equation, $r_{\varphi_2} = \{-h_2 \sin\varphi_2 \cos\alpha_2, -h_2 \sin\varphi_2 \sin\alpha_2, h_2 \cos\varphi_2\}$

$$r_{\alpha_2} = \{-h_2 \cos\varphi_2 \sin\alpha_2, h_2 \cos\varphi_2 \cos\alpha_2, 0\}$$

wherein $h_2$ is a radius of the tooth profile, $n_{x2}$, $n_{y2}$ and $n_{z2}$ denote components in directions of respective coordinate axes of a normal vector at a position where the segment of the tooth profile passes the contact point respectively, parameters $\varphi_2$ and $\alpha_2$ denote general sphere $L_2$ parameters respectively; the equation of the

surface $\Sigma_3$ is:
$$\begin{cases} x_{\Sigma3} = r\cos\theta_3 + h_3 n_{x3} + h_3 \cos\varphi_3 \cos\alpha_3 \\ y_{\Sigma3} = r\sin\theta_3 + h_3 n_{y3} + h_3 \cos\varphi_3 \sin\alpha_3 \\ z_{\Sigma3} = p(\theta_3 + \Delta\theta_2) + h_3 n_{z3} + h_3 \sin\varphi_3 \\ \Phi(\theta_3,\varphi_3,\alpha_3) = (r_{\theta_3}, r_{\varphi_3}, r_{\alpha_3}) = 0 \\ \theta_3 = \theta_1 - \Delta\theta_2 \end{cases}$$

in the equation, $r_{\theta3} = \{$-r $\sin\theta_3 + h_3 n_{x3}(\theta_3)$,r $\cos\theta_3 + h_3 n_{y3}(\theta_3)$, $p + h_3 n_{z3}(\theta_3)\}$ $r_{\varphi3} = \{-h_3 \sin\varphi_3 \cos\alpha_3, \sin\varphi_3 \sin\alpha_3, h_3 \cos\varphi_3\}$ $r_{\alpha3} = \{-h_3 \cos\alpha\varphi_3 \sin\alpha_3, h_3 \cos\varphi_3 \cos\alpha_3, 0\}$

wherein $h_3$ is a radius of the tooth profile, $n_{x3}$, $n_{y3}$ and $n_{z3}$ denote components in directions of respective coordinate axes of a normal vector at a position where the segment of the tooth profile passes the contact point respectively, parameters $\varphi_3$ and $\alpha_3$ denote general sphere $L_3$ parameters respectively;

the equation of the surface $\Sigma_1'$ is:
$$\begin{cases} x_{\Sigma 1} = r\cos\theta_1 - h_1 n_{x1} + h_1 \cos\varphi_1 \cos\alpha_1 \\ y_{\Sigma 1} = r\sin\theta_1 - h_1 n_{y1} + h_1 \cos\varphi_1 \sin\alpha_1 \\ z_{\Sigma 1} = p\theta_1 - h_1 n_{z1} + h_1 \sin\varphi_1 \\ \Phi(\theta_1,\varphi_1,\alpha_1) = (r_{\theta_1}, r_{\varphi_1}, r_{\alpha_1}) = 0 \end{cases}$$

$$r_{\theta_1} = \{-r\sin\theta_1 - h_1 n_{x1}(\theta_1), r\cos\theta_1 - h_1 n_{y1}(\theta_1), p - h_1 n_{z1}(\theta_1)\}$$

in the equation, $r_{\varphi} = \{-h_1 \sin\varphi_1 \cos\alpha_1, -h_1 \sin\varphi_1 \sin\alpha_1, h_1 \cos\varphi_1\}$

$$r_{\alpha} = \{-h_1 \cos\varphi_1 \sin\alpha_1, h_1 \cos\varphi_1 \cos\alpha_1, 0\}$$

$r_{\alpha} = \{-h_1 \cos\varphi_1 \sin\alpha_1, h_1 \cos\varphi_1 \cos\alpha_1, 0\}$

wherein $h_1$ is a radius of the tooth profile, $n_{x1}$, $n_{y1}$ and $n_{z1}$ denote components in directions of respective coordinate axes of a normal vector at a position where the segment of the tooth profile passes the contact point respectively, parameters $\varphi_1$ and $\alpha_1$ denote general sphere $L_1$ parameters respectively;

the equation of the surface $\Sigma_2'$ is:
$$\begin{cases} x_{\Sigma 2} = r\cos\theta_2 - h_2 n_{x2} + h_2 \cos\varphi_2 \cos\alpha_2 \\ y_{\Sigma 2} = r\sin\theta_2 - h_2 n_{y2} + h_2 \cos\varphi_2 \sin\alpha_2 \\ z_{\Sigma 2} = p(\theta_2 + \Delta\theta_1) - h_2 n_{z2} + h_2 \sin\varphi_2 \\ \Phi(\theta_2,\varphi_2,\alpha_2) = (r_{\theta_2}, r_{\varphi_2}, r_{\alpha_2}) = 0 \\ \theta_2 = \theta_1 - \Delta\theta_1 \end{cases}$$

$$r_{\theta_2} = \{-r\sin\theta_2 - h_2 n_{x2}(\theta_2), r\cos\theta_2 - h_2 n_{y2}(\theta_2), p - h_2 n_{z2}(\theta_2)\}$$

in the equation, $r_{\varphi_2} = \{-h_2 \sin\varphi_2 \cos\alpha_2, -h_2 \sin\varphi_2 \sin\alpha_2, h_2 \cos\varphi_2\}$

$$r_{\alpha_2} = \{-h_2 \cos\varphi_2 \sin\alpha_2, h_2 \cos\varphi_2 \cos\alpha_2, 0\}$$

wherein $h_2$ is a radius of the tooth profile, $n_{x2}$, $n_{y2}$ and $n_{z2}$ denote components in directions of respective coordinate axes of a normal vector at a position where the segment of the tooth profile passes the contact point respectively, parameters $\varphi_2$ and $\alpha_2$ denote general sphere $L_2$ parameters respectively;

the equation of the surface $\Sigma_3'$ is:
$$\begin{cases} x_{\Sigma 3} = r\cos\theta_3 - h_3 n_{x3} + h_3 \cos\varphi_3 \cos\alpha_3 \\ y_{\Sigma 3} = r\sin\theta_3 - h_3 n_{y3} + h_3 \cos\varphi_3 \sin\alpha_3 \\ z_{\Sigma 3} = p(\theta_3 + \Delta\theta_2) - h_3 n_{z3} + h_3 \sin\varphi_3 \\ \Phi(\theta_3,\varphi_3,\alpha_3) = (r_{\theta_3}, r_{\varphi_3}, r_{\alpha_3}) = 0 \\ \theta_3 = \theta_1 - \Delta\theta_2 \end{cases}$$

$$r_{\theta_3} = \{-r\sin\theta_3 - h_3 n_{x3}(\theta_3), r\cos\theta_3 - h_3 n_{y3}(\theta_3), p - h_3 n_{z3}(\theta_3)\}$$

in the equation, $r_{\varphi_3} = \{-h_3 \sin\varphi_3 \cos\alpha_3, -h_3 \sin\varphi_3 \sin\alpha_3, h_3 \cos\varphi_3\}$

$$r_{\alpha_3} = \{-h_3 \cos\varphi_3 \sin\alpha_3, h_3 \cos\varphi_3 \cos\alpha_3, 0\}$$

wherein $h_3$ is a radius of the tooth profile, $n_{x3}$, $n_{y3}$ and $n_{z3}$ denote components in directions of respective coordinate axes of a normal vector at a position where the segment of the tooth profile passes the contact point respectively, parameters $\varphi_3$ and $\alpha_3$ denote general sphere $L_3$ parameters respectively.

**Patentansprüche**

1. Auf konjugierte Kurven basierendes Stirnradeingriffspaar mit mehreren Kontaktpunkten, aufweisend:

ein konvexes Zahnrad und ein konkaves Zahnrad, die miteinander in Punktkontakt stehen und mehrere Eingriffspunkte aufweisen,
wobei die miteinander kämmenden Zahnprofile des konvexen Zahnrads und des konkaven Zahnrads rohrförmige Flächen sind,
**dadurch gekennzeichnet, dass**
die Anzahl der Eingriffspunkte des konvexen Zahnrads und des konkaven Zahnrads 3 beträgt und die mehreren Eingriffspunkte des konvexen Zahnrads und des konkaven Zahnrads auf verschiedene Zahnprofilquerschnittsflächen derselben verteilt sind,
wobei es sich bei drei Kontaktkurven, die durch die Eingriffspunkte an den Zahnprofilen des konvexen Zahnrads oder des konkaven Zahnrads gebildet sind, um eine Kontaktkurve $l_1$, eine Kontaktkurve $l_2$ bzw. eine Kontaktkurve $l_3$ handelt;

wobei die Gleichung der Kontaktkurve $l_1$ lautet:
$$\begin{cases} x_1 = r\cos\theta_1 \\ y_1 = r\sin\theta_1 \\ z_1 = p\theta_1 \end{cases}$$

wobei $r$ ein Radius der zylindrischen Helixkurve $l_1$ ist, $\theta_1$ ein Kurvenparameter der zylindrischen Helixkurve $l_1$ ist, der Wertebereich derselben $\theta_{1i} \leq \theta_1 \leq \theta_{1o}$ ist, $p$ ein Helixparameter ist;

wobei die Gleichung der Kontaktkurve $l_2$ lautet:
$$\begin{cases} x_2 = r\cos(\theta_1 - \Delta\theta_1) \\ y_2 = r\sin(\theta_1 - \Delta\theta_1) \\ z_2 = p\theta_1 \end{cases}$$

wobei $r$ ein Radius der zylindrischen Helixkurve $l_1$ ist, $\theta_1$ ein Kurvenparameter der zylindrischen Helixkurve $l_1$ ist, der Wertebereich derselben $\theta_{1i} \leq \theta_1 \leq \theta_{1o}$ ist, $p$ ein Helixparameter ist;

wobei die Gleichung der Kontaktkurve $l_3$ lautet:
$$\begin{cases} x_3 = r\cos(\theta_1 - \Delta\theta_2) \\ y_3 = r\sin(\theta_1 - \Delta\theta_2) \\ z_3 = p\theta_1 \end{cases}$$

wobei $r$ ein Radius der zylindrischen Helixkurve $l_1$ ist, $\theta_1$ ein Kurvenparameter der zylindrischen Helixkurve $l_1$ ist, der Wertebereich derselben $\theta_{1i} \leq \theta_1 \leq \theta_{1o}$ ist, $p$ ein Helixparameter ist,
wobei das Zahnprofil des konvexen Zahnrads eine Oberfläche $\Sigma_1$, eine Oberfläche $\Sigma_2$ und eine Oberfläche $\Sigma_3$ beinhaltet; wobei das Zahnprofil des konkaven Zahnrads eine Oberfläche $\Sigma_1'$, eine Oberfläche $\Sigma_2'$ und eine Oberfläche $\Sigma_3'$ beinhaltet;

wobei die Gleichung der Oberfläche $\Sigma_1$ lautet:

$$\begin{cases} x_{\Sigma 1} = r\cos\theta_1 + h_1 n_{x1} + h_1\cos\varphi_1\cos\alpha_1 \\ y_{\Sigma 1} = r\sin\theta_1 + h_1 n_{y1} + h_1\cos\varphi_1\sin\alpha_1 \\ z_{\Sigma 1} = p\theta_1 + h_1 n_{z1} + h_1\sin\varphi_1 \\ \Phi(\theta_1,\varphi_1,\alpha_1) = (r_{\theta_1}, r_{\varphi_1}, r_{\alpha_1}) = 0 \end{cases}$$

wobei in der Gleichung

$$\boldsymbol{r}_{\theta_1} = \{-r\sin\theta_1 + h_1 n_{x1}(\theta_1), r\cos\theta_1 + h_1 n_{y1}(\theta_1), p + h_1 n_{z1}(\theta_1)\}$$

$$r_\varphi = \{-h_1 \sin\varphi_1 \cos\alpha_1, -h_1 \sin\varphi_1 \sin\alpha_1, h_1 \cos\varphi_1\}$$

$$r_\alpha = \{-h_1 \cos\varphi_1 \sin\alpha_1, h_1 \cos\varphi_1 \cos\alpha_1, 0\}$$

sind,
wobei $h_1$ ein Radius des Zahnprofils ist, $n_{x1}$, $n_{y1}$ und $n_{z1}$ Komponenten in Richtungen von jeweiligen Koordinatenachsen eines Normalenvektors an einer Position bezeichnen, an der das Segment des Zahnprofils jeweils durch den Kontaktpunkt verläuft, Parameter $\varphi_1$ und $\alpha_1$ jeweils allgemeine Kugelparameter $L_1$ bezeichnen;
wobei die Gleichung der Oberfläche $\Sigma_2$ lautet:

$$\begin{cases} x_{\Sigma2} = r\cos\theta_2 + h_2 n_{x2} + h_2 \cos\varphi_2 \cos\alpha_2 \\ y_{\Sigma2} = r\sin\theta_2 + h_2 n_{y2} + h_2 \cos\varphi_2 \sin\alpha_2 \\ z_{\Sigma2} = p(\theta_2 + \Delta\theta_1) + h_2 n_{z2} + h_2 \sin\varphi_2 \\ \Phi(\theta_2, \varphi_2, \alpha_2) = (r_{\theta_2}, r_{\varphi_2}, r_{\alpha_2}) = 0 \\ \theta_2 = \theta_1 - \Delta\theta_1 \end{cases}$$

wobei in der Gleichung

$$r_{\theta_2} = \{-r\sin\theta_2 + h_2 n_{x2}(\theta_2), r\cos\theta_2 + h_2 n_{y2}(\theta_2), p + h_2 n_{z2}(\theta_2)\}$$

$$r_{\varphi_2} = \{-h_2 \sin\varphi_2 \cos\alpha_2, -h_2 \sin\varphi_2 \sin\alpha_2, h_2 \cos\varphi_2\}$$

$$r_{\alpha_2} = \{-h_2 \cos\varphi_2 \sin\alpha_2, h_2 \cos\varphi_2 \cos\alpha_2, 0\}$$

sind,
wobei $h_2$ ein Radius des Zahnprofils ist, $n_{x2}$, $n_{y2}$ und $n_{z2}$ Komponenten in Richtungen von jeweiligen Koordinatenachsen eines Normalenvektors an einer Position bezeichnen, an der das Segment des Zahnprofils jeweils durch den Kontaktpunkt verläuft, Parameter $\varphi_2$ und $\alpha_2$ jeweils allgemeine Kugelparameter $L_2$ bezeichnen;
wobei die Gleichung der Oberfläche $\Sigma_3$ lautet:

$$\begin{cases} x_{\Sigma3} = r\cos\theta_3 + h_3 n_{x3} + h_3 \cos\varphi_3 \cos\alpha_3 \\ y_{\Sigma3} = r\sin\theta_3 + h_3 n_{y3} + h_3 \cos\varphi_3 \sin\alpha_3 \\ z_{\Sigma3} = p(\theta_3 + \Delta\theta_2) + h_3 n_{z3} + h_3 \sin\varphi_3 \\ \Phi(\theta_3, \varphi_3, \alpha_3) = (r_{\theta_3}, r_{\varphi_3}, r_{\alpha_3}) = 0 \\ \theta_3 = \theta_1 - \Delta\theta_2 \end{cases}$$

wobei in der Gleichung

$$r_{\theta_3} = \{-r\sin\theta_3 + h_3 n_{x3}(\theta_3), r\cos\theta_3 + h_3 n_{y3}(\theta_3), p + h_3 n_{z3}(\theta_3)\}$$

$$r_{\varphi_3} = \{-h_3 \sin\varphi_3 \cos\alpha_3, -h_3 \sin\varphi_3 \sin\alpha_3, h_3 \cos\varphi_3\}$$

EP 3 348 869 B1

$$r_{\alpha_3} = \{-h_3 \cos\varphi_3 \sin\alpha_3, h_3 \cos\varphi_3 \cos\alpha_3, 0\}$$

sind,

wobei $h_3$ ein Radius des Zahnprofils ist, $n_{x3}$, $n_{y3}$ und $n_{z3}$ Komponenten in Richtungen von jeweiligen Koordinatenachsen eines Normalenvektors an einer Position bezeichnen, an der das Segment des Zahnprofils jeweils durch den Kontaktpunkt verläuft, Parameter $\varphi_3$ und $\alpha_3$ jeweils allgemeine Kugelparameter $L_3$ bezeichnen;

wobei die Gleichung der Oberfläche $\Sigma_1'$ lautet:

$$\begin{cases} x_{\Sigma 1} = r\cos\theta_1 - h_1 n_{x1} + h_1 \cos\varphi_1 \cos\alpha_1 \\ y_{\Sigma 1} = r\sin\theta_1 - h_1 n_{y1} + h_1 \cos\varphi_1 \sin\alpha_1 \\ z_{\Sigma 1} = p\theta_1 - h_1 n_{z1} + h_1 \sin\varphi_1 \\ \Phi(\theta_1, \varphi_1, \alpha_1) = (r_{\theta_1}, r_{\varphi_1}, r_{\alpha_1}) = 0 \end{cases}$$

wobei in der Gleichung

$$r_{\theta_1} = \{-r\sin\theta_1 - h_1 n_{x1}(\theta_1), r\cos\theta_1 - h_1 n_{y1}(\theta_1), p - h_1 n_{z1}(\theta_1)\}$$

$$r_{\varphi} = \{-h_1 \sin\varphi_1 \cos\alpha_1, -h_1 \sin\varphi_1 \sin\alpha_1, h_1 \cos\varphi_1\}$$

$$r_{\alpha} = \{-h_1 \cos\varphi_1 \sin\alpha_1, h_1 \cos\varphi_1 \cos\alpha_1, 0\}$$

sind,

wobei $h_1$ ein Radius des Zahnprofils ist, $n_{x1}$, $n_{y1}$ und $n_{z1}$ Komponenten in Richtungen von jeweiligen Koordinatenachsen eines Normalenvektors an einer Position bezeichnen, an der das Segment des Zahnprofils jeweils durch den Kontaktpunkt verläuft, Parameter $\varphi_1$ und $\alpha_1$ jeweils allgemeine Kugelparameter $L_1$ bezeichnen;

wobei die Gleichung der Oberfläche $\Sigma_2'$ lautet:

$$\begin{cases} x_{\Sigma 2} = r\cos\theta_2 - h_2 n_{x2} + h_2 \cos\varphi_2 \cos\alpha_2 \\ y_{\Sigma 2} = r\sin\theta_2 - h_2 n_{y2} + h_2 \cos\varphi_2 \sin\alpha_2 \\ z_{\Sigma 2} = p(\theta_2 + \Delta\theta_1) - h_2 n_{z2} + h_2 \sin\varphi_2 \\ \Phi(\theta_2, \varphi_2, \alpha_2) = (r_{\theta_2}, r_{\varphi_2}, r_{\alpha_2}) = 0 \\ \theta_2 = \theta_1 - \Delta\theta_1 \end{cases}$$

wobei in der Gleichung

$$r_{\theta_2} = \{-r\sin\theta_2 - h_2 n_{x2}(\theta_2), r\cos\theta_2 - h_2 n_{y2}(\theta_2), p - h_2 n_{z2}(\theta_2)\}$$

$$r_{\varphi_2} = \{-h_2 \sin\varphi_2 \cos\alpha_2, -h_2 \sin\varphi_2 \sin\alpha_2, h_2 \cos\varphi_2\}$$

$$r_{\alpha_2} = \{-h_2 \cos\varphi_2 \sin\alpha_2, h_2 \cos\varphi_2 \cos\alpha_2, 0\}$$

20

sind,

wobei $h_2$ ein Radius des Zahnprofils ist, $n_{x2}$, $n_{y2}$ und $n_{z2}$ Komponenten in Richtungen von jeweiligen Koordinatenachsen eines Normalenvektors an einer Position bezeichnen, an der das Segment des Zahnprofils jeweils durch den Kontaktpunkt verläuft, Parameter $\varphi_2$ und $\alpha_2$ jeweils allgemeine Kugelparameter L$_2$ bezeichnen;

wobei die Gleichung der Oberfläche $\sum'_3$ lautet:

$$\begin{cases} x_{\Sigma 3} = r\cos\theta_3 - h_3 n_{x3} + h_3\cos\varphi_3\cos\alpha_3 \\ y_{\Sigma 3} = r\sin\theta_3 - h_3 n_{y3} + h_3\cos\varphi_3\sin\alpha_3 \\ z_{\Sigma 3} = p(\theta_3 + \Delta\theta_2) - h_3 n_{z3} + h_3\sin\varphi_3 \\ \Phi(\theta_3, \varphi_3, \alpha_3) = (r_{\theta_3}, r_{\varphi_3}, r_{\alpha_3}) = 0 \\ \theta_3 = \theta_1 - \Delta\theta_2 \end{cases}$$

wobei in der Gleichung

$$r_{\theta_3} = \{-r\sin\theta_3 - h_3 n_{x3}(\theta_3), r\cos\theta_3 - h_3 n_{y3}(\theta_3), p - h_3 n_{z3}(\theta_3)\}$$

$$r_{\varphi_3} = \{-h_3\sin\varphi_3\cos\alpha_3, -h_3\sin\varphi_3\sin\alpha_3, h_3\cos\varphi_3\}$$

$$r_{\alpha_3} = \{-h_3\cos\varphi_3\sin\alpha_3, h_3\cos\varphi_3\cos\alpha_3, 0\}$$

sind,

wobei $h_3$ ein Radius des Zahnprofils ist, $n_{x3}$, $n_{y3}$ und $n_{z3}$ Komponenten in Richtungen von jeweiligen Koordinatenachsen eines Normalenvektors an einer Position bezeichnen, an der das Segment des Zahnprofils jeweils durch den Kontaktpunkt verläuft, Parameter $\varphi_3$ und $\alpha_3$ jeweils allgemeine Kugelparameter L$_3$ bezeichnen.

## Revendications

1.  Paire d'engrenages cylindriques du type à contact multipoint qui se base sur des courbes conjuguées, qui comprend :

    une roue convexe et une roue concave qui entrent mutuellement en contact de manière ponctuelle et qui possèdent plusieurs points d'engrènement ou de contact ;
    dans laquelle les profils de la denture d'engrènement de la roue convexe et de la roue concave représentent des surfaces tubulaires ;
    **caractérisée en ce que**
    le nombre des points de contact de la roue convexe et de la roue concave est égal à 3 et les points de contacts multiples de la roue convexe et de la roue concave sont distribués sur différentes sections transversales de leurs profils de dentures ;
    dans laquelle trois courbes de contact formées par les points de contact sur les profils de dentures de la roue convexe ou de la roue concave représentent une courbe de contact $l_1$, une courbe de contact $l_2$ et une courbe de contact $l_3$, respectivement ; l'équation de la courbe de contact $l_1$ est : ; $\begin{cases} x_1 = r\cos\theta_1 \\ y_1 = r\sin\theta_1 \\ z_1 = p\theta_1 \end{cases}$

    dans laquelle $r$ représente un rayon de la courbe hélicoïdale cylindrique $l_1$, $\theta_1$ représente un paramètre de courbe de la courbe hélicoïdale cylindrique $l_1$, sa plage de valeurs est égale à $\theta_{1i} \le \theta_1 \le \theta_{10}$, $p$ représente un paramètre de l'hélice ;

l'équation de la courbe de contact $l_2$ est :
$$\begin{cases} x_2 = r\cos(\theta_1 - \Delta\theta_1) \\ y_2 = r\sin(\theta_1 - \Delta\theta_1) \\ z_2 = p\theta_1 \end{cases}$$
dans laquelle $r$ représente un rayon de la courbe hélicoïdale cylindrique $l_1$, $\theta_1$ représente un paramètre de courbe de la courbe hélicoïdale cylindrique $l_1$, sa plage de valeurs est égale à $\theta_{1i} \le \theta_1 \le \theta_{10}$, $p$ représente un paramètre de l'hélice ;

l'équation de la courbe de contact $l_3$ est :
$$\begin{cases} x_3 = r\cos(\theta_1 - \Delta\theta_2) \\ y_3 = r\sin(\theta_1 - \Delta\theta_2) \\ z_3 = p\theta_1 \end{cases}$$

dans laquelle $r$ représente un rayon de la courbe hélicoïdale cylindrique $l_1$, $\theta_1$ représente un paramètre de courbe de la courbe hélicoïdale cylindrique $l_1$, sa plage de valeurs est égale à $\theta_{1i} \le \theta_1 \le \theta_{10}$, $p$ représente un paramètre de l'hélice ;

dans laquelle le profil de denture de la roue convexe englobe une surface $\Sigma_1$, une surface $\Sigma_2$, et une surface $\Sigma_1$; le profil de denture de la roue concave englobe une surface $\Sigma'_1$, une surface $\Sigma'_2$, et une surface $\Sigma'_3$;

l'équation de $\Sigma_1$ est:
$$\begin{cases} x_{\Sigma 1} = r\cos\theta_1 + h_1 n_{x1} + h_1 \cos\varphi_1 \cos\alpha_1 \\ y_{\Sigma 1} = r\sin\theta_1 + h_1 n_{y1} + h_1 \cos\varphi_1 \sin\alpha_1 \\ z_{\Sigma 1} = p\theta_1 + h_1 n_{z1} + h_1 \sin\varphi_1 \\ \Phi(\theta_1, \varphi_1, \alpha_1) = (r_{\theta_1}, r_{\varphi_1}, r_{\alpha_1}) = 0 \end{cases}$$

dans l'équation
$$r_{\theta_1} = \{-r\sin\theta_1 + h_1 n_{x1}(\theta_1), r\cos\theta_1 + h_1 n_{y1}(\theta_1), p + h_1 n_{z1}(\theta_1)\}$$
$$r_{\varphi} = \{-h_1 \sin\varphi_1 \cos\alpha_1, -h_1 \sin\varphi_1 \sin\alpha_1, h_1 \cos\varphi_1\}$$
$$r_{\alpha} = \{-h_1 \cos\varphi_1 \sin\alpha_1, h_1 \cos\varphi_1 \cos\alpha_1, 0\}$$

dans laquelle $h_1$ représente un rayon du profil de denture, $n_{x1}$, $n_{y1}$ et $n_{z1}$ désignent des composants dans des directions d'axes de coordonnées respectifs d'un vecteur normal à un endroit ou le segment du profil de denture passe par le point de contact, respectivement, les paramètres $\varphi_1$ et $\alpha_1$ désignent des paramètres généraux de

la sphère $L_1$, respectivement ; l'équation de $\Sigma_2$ est :
$$\begin{cases} x_{\Sigma 2} = r\cos\theta_2 + h_2 n_{x2} + h_2 \cos\varphi_2 \cos\alpha_2 \\ y_{\Sigma 2} = r\sin\theta_2 + h_2 n_{y2} + h_2 \cos\varphi_2 \sin\alpha_2 \\ z_{\Sigma 2} = p(\theta_2 + \Delta\theta_1) + h_2 n_{z2} + h_2 \sin\varphi_2 \\ \Phi(\theta_2, \varphi_2, \alpha_2) = (r_{\theta_2}, r_{\varphi_2}, r_{\alpha_2}) = 0 \\ \theta_2 = \theta_1 - \Delta\theta_1 \end{cases}$$

dans l'équation
$$r_{\theta_2} = \{-r\sin\theta_2 + h_2 n_{x2}(\theta_2), r\cos\theta_2 + h_2 n_{y2}(\theta_2), p + h_2 n_{z2}(\theta_2)\}$$
$$r_{\varphi_2} = \{-h_2 \sin\varphi_2 \cos\alpha_2, -h_2 \sin\varphi_2 \sin\alpha_2, h_2 \cos\varphi_2\}$$
$$r_{\alpha_2} = \{-h_2 \cos\varphi_2 \sin\alpha_2, h_2 \cos\varphi_2 \cos\alpha_2, 0\}$$

dans laquelle $h_2$ représente un rayon du profil de denture, $n_{x2}$, $n_{y2}$ et $n_{z2}$ désignent des composants dans des directions d'axes de coordonnées respectifs d'un vecteur normal à un endroit ou le segment du profil de denture passe par le point de contact, respectivement, les paramètres $\varphi_2$ et $\alpha_2$ désignent des paramètres généraux de

la sphère $L_2$, respectivement ; l'équation de $\Sigma_3$ est:

$$\begin{cases} x_{\Sigma 3} = r\cos\theta_3 + h_3 n_{x3} + h_3 \cos\varphi_3 \cos\alpha_3 \\ y_{\Sigma 3} = r\sin\theta_3 + h_3 n_{y3} + h_3 \cos\varphi_3 \sin\alpha_3 \\ z_{\Sigma 3} = p(\theta_3 + \Delta\theta_2) + h_3 n_{z3} + h_3 \sin\varphi_3 \\ \Phi(\theta_3, \varphi_3, \alpha_3) = (r_{\theta_3}, r_{\varphi_3}, r_{\alpha_3}) = 0 \\ \theta_3 = \theta_1 - \Delta\theta_2 \end{cases}$$

$$r_{\theta_3} = \{-r\sin\theta_3 + h_3 n_{x3}(\theta_3), r\cos\theta_3 + h_3 n_{y3}(\theta_3), p + h_3 n_{z3}(\theta_3)\}$$

dans l'équation, $r_{\varphi_3} = \{-h_3\sin\varphi_3\cos\alpha_3, -h_3\sin\varphi_3\sin\alpha_3, h_3\cos\varphi_3\}$

$$r_{\alpha_3} = \{-h_3\cos\varphi_3\sin\alpha_3, h_3\cos\varphi_3\cos\alpha_3, 0\}$$

dans laquelle $h_3$ représente un rayon du profil de denture, $n_{x3}$, $n_{y3}$ et $n_{z3}$ désignent des composants dans des directions d'axes de coordonnées respectifs d'un vecteur normal à un endroit ou le segment du profil de denture passe par le point de contact, respectivement, les paramètres $\varphi_3$ et $\alpha_3$ désignent des paramètres généraux de

la sphère $L_3$, respectivement ; l'équation de $\Sigma_1'$ est :

$$\begin{cases} x_{\Sigma 1} = r\cos\theta_1 - h_1 n_{x1} + h_1 \cos\varphi_1 \cos\alpha_1 \\ y_{\Sigma 1} = r\sin\theta_1 - h_1 n_{y1} + h_1 \cos\varphi_1 \sin\alpha_1 \\ z_{\Sigma 1} = p\theta_1 - h_1 n_{z1} + h_1 \sin\varphi_1 \\ \Phi(\theta_1, \varphi_1, \alpha_1) = (r_{\theta_1}, r_{\varphi_1}, r_{\alpha_1}) = 0 \end{cases}$$

$$r_{\theta_1} = \{-r\sin\theta_1 - h_1 n_{x1}(\theta_1), r\cos\theta_1 - h_1 n_{y1}(\theta_1), p - h_1 n_{z1}(\theta_1)\}$$

dans l'équation $r_{\varphi} = \{-h_1\sin\varphi_1\cos\alpha_1, -h_1\sin\varphi_1\sin\alpha_1, h_1\cos\varphi_1\}$

$$r_{\alpha} = \{-h_1\cos\varphi_1\sin\alpha_1, h_1\cos\varphi_1\cos\alpha_1, 0\}$$

dans laquelle $h_1$ représente un rayon du profil de denture, $n_{x1}$, $n_{y1}$ et $n_{z1}$ désignent des composants dans des directions d'axes de coordonnées respectifs d'un vecteur normal à un endroit ou le segment du profil de denture passe par le point de contact, respectivement, les paramètres $\varphi_1$ et $\alpha_1$ désignent des paramètres généraux de

la sphère $L_1$, respectivement ; l'équation de $\Sigma_2'$ est :

$$\begin{cases} x_{\Sigma 2} = r\cos\theta_2 - h_2 n_{x2} + h_2 \cos\varphi_2 \cos\alpha_2 \\ y_{\Sigma 2} = r\sin\theta_2 - h_2 n_{y2} + h_2 \cos\varphi_2 \sin\alpha_2 \\ z_{\Sigma 2} = p(\theta_2 + \Delta\theta_1) - h_2 n_{z2} + h_2 \sin\varphi_2 \\ \Phi(\theta_2, \varphi_2, \alpha_2) = (r_{\theta_2}, r_{\varphi_2}, r_{\alpha_2}) = 0 \\ \theta_2 = \theta_1 - \Delta\theta_1 \end{cases}$$

$$r_{\theta_2} = \{-r\sin\theta_2 - h_2 n_{x2}(\theta_2), r\cos\theta_2 - h_2 n_{y2}(\theta_2), p - h_2 n_{z2}(\theta_2)\}$$

dans l'équation, $r_{\varphi_2} = \{-h_2\sin\varphi_2\cos\alpha_2, -h_2\sin\varphi_2\sin\alpha_2, h_2\cos\varphi_2\}$

$$r_{\alpha_2} = \{-h_2\cos\varphi_2\sin\alpha_2, h_2\cos\varphi_2\cos\alpha_2, 0\}$$

dans laquelle $h_2$ représente un rayon du profil de denture, $n_{x2}$, $n_{y2}$ et $n_{z2}$ désignent des composants dans des directions d'axes de coordonnées respectifs d'un vecteur normal à un endroit ou le segment du profil de denture passe par le point de contact, respectivement, les paramètres $\varphi_2$ et $\alpha_2$ désignent des paramètres généraux de

la sphère $L_2$, respectivement ; l'équation de $\Sigma_3^{\cdot}$ est:

$$\begin{cases} x_{\Sigma 3} = r\cos\theta_3 - h_3 n_{x3} + h_3 \cos\varphi_3 \cos\alpha_3 \\ y_{\Sigma 3} = r\sin\theta_3 - h_3 n_{y3} + h_3 \cos\varphi_3 \sin\alpha_3 \\ z_{\Sigma 3} = p(\theta_3 + \Delta\theta_2) - h_3 n_{z3} + h_3 \sin\varphi_3 \\ \Phi(\theta_3,\varphi_3,\alpha_3) = (r_{\theta_3}, r_{\varphi_3}, r_{\alpha_3}) = 0 \\ \theta_3 = \theta_1 - \Delta\theta_2 \end{cases}$$

$$r_{\theta_3} = \{-r\sin\theta_3 - h_3 n_{x3}(\theta_3), r\cos\theta_3 - h_3 n_{y3}(\theta_3), p - h_3 n_{z3}(\theta_3)\}$$

dans l'équation, $r_{\varphi_3} = \{-h_3 \sin\varphi_3 \cos\alpha_3, -h_3 \sin\varphi_3 \sin\alpha_3, h_3 \cos\varphi_3\}$

$$r_{\alpha_3} = \{-h_3 \cos\varphi_3 \sin\alpha_3, h_3 \cos\varphi_3 \cos\alpha_3, 0\}$$

dans laquelle $h_3$ représente un rayon du profil de denture, $n_{x3}$, $n_{y3}$ et $n_{z3}$ désignent des composants dans des directions d'axes de coordonnées respectifs d'un vecteur normal à un endroit ou le segment du profil de denture passe par le point de contact, respectivement, les paramètres $\varphi_3$ et $\alpha_3$ désignent des paramètres généraux de la sphère $L_3$, respectivement.

Figure 1

Figure 2

Figure 3

Figure 4

Figure 5

Figure 6

Figure 7

Figure 8

Figure 9

Figure 10

Figure 11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 102853054 A
- CN 103075493 A

- CN 103939575 A

**Non-patent literature cited in the description**

- **CHEN, BINGKUI et al.** Tooth Profile Generation of Conjugate-curve Gears. *CHINESE JOURNAL OF MECHANICAL ENGINEERING,* 28 February 2014, vol. 50 (3), 18-24